# EUROPÄISCHE PATENTSCHRIFT

(11) **EP 3 374 160 B1**
(45) Veröffentlichungstag und Bekanntmachung des Hinweises auf die Patenterteilung: **22.04.2020**
(21) Anmeldenummer: 16808552.0
(22) Anmeldetag: 10.11.2016
(51) Int. Cl.: B29C 64/124, B29C 64/259, B29C 64/379, B33Y 30/00

(54) **STEREOLITHOGRAPHIE-VORRICHTUNG MIT KARTUSCHENEINRICHTUNG**
STEREOLITHOGRAPHY APPARATUS COMPRISING A CARTRIDGE DEVICE
SYSTÈME STÉRÉOLITHOGRAPHIQUE DOTÉ D'UN DISPOSITIF CARTOUCHE

(30) Priorität: 12.11.2015 AT 509662015
(43) Veröffentlichungstag der Anmeldung: 19.09.2018
(73) Patentinhaber: Stadlmann, Klaus, 1030 Wien (AT)
(72) Erfinder: Stadlmann, Klaus, 1030 Wien (AT)
(74) Vertreter: Özer, Alpdeniz
(86) Internationale Anmeldenummer: PCT/AT2016/060104
(87) Internationale Veröffentlichungsnummer: WO 2017/079774

(56) Entgegenhaltungen:
- WO-A1-2014/201486
- WO-A1-2016/062739
- WO-A2-2014/126834
- CN-U- 204 466 799
- JP-A- H0 596 631
- JP-A- S63 236 627

## Beschreibung

Die Erfindung betrifft eine Stereolithographie-Vorrichtung zum Herstellen eines dreidimensionalen Objektes durch schichtweises oder kontinuierliches Aushärten einer fotosensitiven Substanz durch Einwirkung einer spezifischen, die Aushärtung auslösenden Strahlung, wobei die Vorrichtung umfasst:
- eine Trägereinrichtung;
- eine Strahlungsquelle zum Erzeugen der die Aushärtung auslösenden Strahlung;
- eine auf der Trägereinrichtung positionierbare und entnehmbare Kartuscheneinrichtung.
sowie eine Kartuscheneinrichtung für eine derartige Stereolithographie-Vorrichtung.

Vorrichtungen dieser Art sind wohlbekannt. In einer Stereolithographie-Anlage wird durch schichtweises oder kontinuierliches Aneinanderreihen von Schichten bzw. Schichtinformationen ein dreidimensionaler Körper aus einer fotosensitiven Substanz erzeugt. Die Erfindung befasst sich mit der Verwendung eines verbesserten Kartuschensystems, das in eine derartige Anlage eingesetzt werden kann und das herzustellende Objekt umgibt.

Der Begriff Stereolithographie bezeichnet einen Herstellungsprozess, bei dem eine lichtempfindliche, bei Bestrahlung durch Licht aushärtbare Substanz, zumeist eine flüssige Monomerformulierung, verwendet wird, um Schicht für Schicht durch Erzeugen einer geometrischen Schichtinformation, die beispielsweise durch eine digitale Maske oder durch einen bewegten Laserstrahl erzeugt werden kann, einen dreidimensionalen Körper ("Objekt") mit einer vorgebbaren gewünschten Formgebung zu erzeugen. Das grundlegende Prinzip der Stereolithographie ist auch unter Begriffen wie Rapid Prototyping, 3D-Druck usw. bekannt.

Für den Stereolithographie-Vorgang können neben einem steuerbaren Laser auch pixelbasierte Anzeige-Displays, inkohärente Lichtquellen, z.B. in Verbindung mit steuerbaren Mikrospiegeln (sogenannte MEMS- oder DLP-Chips), genutzt werden, um geometrische Schichtinformation in eine fotosensitive Substanz zu projizieren, um diese schichtweise oder kontinuierlich auf dem Boden oder einer anderen definierten Referenzfläche auszuhärten ("entwickeln"). Die Schichtinformation kann insbesondere pixelbasiert sein. Die Referenzfläche (auch Referenzebene) stellt eine definierte Fläche dar, auf der die Aushärtung einer Schicht der fotosensitiven Substanz erfolgt; diese kann die Oberfläche des Boden- oder Deckelinnenseite oder eine andere geeignet definierte Fläche sein und je nach Anwendung eine geeignete feste, flexible oder flüssige Konsistenz haben. Um die ausgehärtete Schicht von der Referenzfläche zu trennen, wird diese anfangs, d.h. vor dem ersten Schritt des generativen Prozesses, auf einen Träger übertragen (z.B. durch einen Polymerisationsprozess angeheftet), welcher in der Lage ist, eine Relativbewegung zur Fokusebene, welche mit der Oberseite der Referenzfläche (beispielweise dem Kartuschenboden) übereinstimmen kann, durchzuführen. In einem nächsten Verfahrensschritt wird dafür gesorgt, dass neues Material der fotosensitiven Substanz zwischen der zuletzt erzeugten Schicht und der Referenzfläche nachfließen kann; dies kann beispielsweise durch eine einfache Hubbewegung erfolgen. Daraufhin kann die nachgeflossene fotosensitive Substanz wiederum durch Belichten aushärten. Diese Verfahrensschritte werden so oft wiederholt, bis das zu bildende Objekt gemäß den einzelnen projizierten Schichtinformationen aufgebaut worden ist.

Bei diesen Verfahren liegen die größten Probleme vor allem in der effektiven und variablen Speicherung bzw. Aufbewahrung der fotosensitiven Substanz innerhalb der Anlage selbst, sowie dem schonenden Trennen der einzelnen Schichten von der Referenzfläche, der effektiven Steuerung der Relativbewegung des Trägers der erzeugten Schichten bzw. des erzeugten Objektes relativ zur Referenzfläche, sowie einer möglichst einfachen Handhabung der Anlage und dem Zuführen von neuem fotosensitiven Material in die Anlage.

Aus dem Stand der Technik sind diverse Lösungen bekannt, welche zumeist offene wannenförmige Behälter für die fotosensitive Substanz vorsehen. Auch wurden Kartuschen beschrieben, die jedoch sehr komplexe, steife und aufwändige Behälter darstellen.

Beispielsweise beschreibt DE 10 2014 215 213 A1 einen Behälter, in dem eine mit einer Bodenplatte verbundene Folie vorgesehen ist, welche durch einen nichttransparenten Teil nachunten gespannt wird. Diese Folie kann beim Abheben der Schichten verformt werden, um damit ein leichteres und schonenderes Lösen zu ermöglichen. Der Behälter ist eine zusammengesetzte, komplexe Baugruppe, die unter anderem die Bodenplatte, ein in den Behälter ragender Spannteil sowie diverse andere Teile wie den Träger selbst umfasst, und einen komplizierten Aufbau repräsentiert.

Andere Lösungen, siehe DE 101 19 817 A1 und JP H06 246 838 A, verwenden anstelle einer geschlossenen Kartusche eine offene, wannenförmige Geometrie, die ebenfalls eine verformbare Folie zur Minderung der Abzugskräfte beinhalten. Das Dokument WO 2014/201486 offenbart eine Kartuscheneinrichtung zur Verwendung in einer Stereolithographie-Vorrichtung, welche Kartuscheneinrichtung einen von einer Hülle umschlossenen Innenraum aufweist, wobei die Hülle der Kartuscheneinrichtung verformbar ist, wobei der Innenraum ein während einer Verformung der Hülle im Wesentlichen gleich bleibendes Volumen aufweist, das zumindest zum Teil von einem Aufnahmeraum gebildet wird, in dem eine Menge einer fotosensitiven Substanz für zumindest eine Zeitdauer eines Bestrahlungs- und Aushärtungsvorgangs aufnehmbar ist und für eine Strahlung, die ein Aushärten der fotosensitiven Substanz auslöst, zugänglich ist.

Die bekannten Lösungen haben den Nachteil eines sehr komplexen Aufbaus eines Kartuschensystems sowie der Wannen selbst, sowie Nachteile der Handhabung der fotosensitiven Substanz hinsichtlich z.B. der Reinigung der Wanne, Einlegen der Wanne in die Maschine, Festlegung einer genauen Füllmenge, sowie den offenen Flüssigkeitsspiegel bei Wannensystemen, die Gefahr des direkten Kontakts mit der fotosensitiven Substanz bzw. der Verunreinigung der Anlage selbst während des Nachfüllens bzw. Umfüllens. Erhebliche Nachteile treten auch beim Einsetzen einer mit fotosensitiven Material gefüllten Wanne und/oder beim Entnehmen der Wanne dadurch auf, dass komplizierte Spannmechanismen betätigt werden müssen oder die Wanne in Haltevorrichtungen eingeschoben werden muss. Auch bei der Entnahme des erzeugten Bauteiles besteht das Problem der Kontamination der Anlage und/oder der betreibenden Person, insbesondere der Kontaminierung einzelner Anlagenbauteile oder Bauteilgruppen, welche beim Wechsel zu einem anderen fotosensitiven Monomer gereinigt werden müssen, was mühsam und zeitaufwendig ist. Ein weiterer Nachteil besteht darin, dass herkömmlichen Lösungen nicht ermöglichen, unter einer bestimmten Atmosphäre bzw. bestimmten atmosphärischen Bedingungen zu arbeiten. Auch stellt die Reinigung des erzeugten Objekts ein Problem dar, da bei der Entnahme des Trägers des Objekts aus der Maschine das Objekt benetzende, nicht ausgehärtete Monomere die Maschine sowie den Aufstellungsort der Maschine verunreinigen können, abgesehen von einer möglichen Kontamination des Benutzers. Zudem unterliegt die fotosensitive Substanz durch den offen liegenden Flüssigkeitsspiegel einer gewissen Alterung, welche die chemischen Eigenschaften verändern und damit die Eigenschaften des gebildeten Objektes, wie zum Beispiel eine geforderte Biokompatibilität, nachteilig beeinflussen.

Die hier vorgestellte Erfindung hat die Aufgabe, eine Stereolithographie-Vorrichtung bzw. eine Kartuscheneinrichtung für eine solche Vorrichtung zu schaffen, die die oben genannten Nachteile überwindet und ein vereinfachtes, störungsfreies, wirtschaftliches, vorzugsweise kontinuierliches, sowie leicht zu dokumentierendes Erzeugen dreidimensionaler Objekte zu erreichen.

Diese Aufgabe wird durch die Erfindung in Form einer Kartuscheneinrichtung gemäß den Ansprüchen 1, 5, 8, 9, 10 und 12 sowie einer Stereolithographie-Vorrichtung mit einer derartigen Kartuscheneinrichtung gelöst.

Im Besonderen weist die Kartuscheneinrichtung einen von einer Hülle umschlossenen Innenraum auf, wobei zumindest ein Teilbereich der Hülle für die die Aushärtung auslösende Strahlung zumindest teilweise durchlässig ist, wobei erfindungsgemäß die Hülle der Kartuscheneinrichtung verformbar ist und der von der Hülle umschlossene Innenraum ein Volumen aufweist, das zumindest zum Teil von einem Aufnahmeraum für die fotosensitive Substanz gebildet wird. Hierbei wird unter "Aufnahmeraum" jener Raum verstanden, in dem eine Menge der fotosensitiven Substanz für zumindest eine Zeitdauer eines Bestrahlungs- und Aushärtungsvorgangs aufnehmbar ist und für die Strahlung zugänglich ist. In dem Aufnahmeraum ist eine Menge der fotosensitiven Substanz für zumindest eine Zeitdauer eines Bestrahlungs- und Aushärtungsvorgangs aufnehmbar und für Strahlung, die ein Aushärten der fotosensitiven Substanz auslöst, zugänglich.

Die erfindungsgemäße Lösung sieht - anstatt einer im Wesentlichen starren Kartusche bekannter Art - eine Kartusche vor, deren Hülle sowie deren Boden mindestens teilweise flexibel ausgebildet ist und mindestens aus einem Material besteht. Durch die flexible Ausführung der Hülle wird ein Verformen der Kartuschen-Hülle sowie falls notwendig des gesamten Kartuschen-Körpers ermöglicht, beispielsweise durch ein Stauchen der Kartusche, sodass ein direktes Erzeugen der Schichten sowie Anhaften der Schichten am Objektträger (nachfolgend Träger) mit nachfolgendem Trennen der Schichten von der Referenzfläche erleichtert wird, während sich die fotosensitive Substanz zumindest teilweise während des Aufbauprozesses innerhalb der Kartusche befindet. Dabei wird mit zunehmender Anzahl der erzeugten Schichten die Kartusche gestreckt bzw. weniger gestaucht (verformt), so dass sie nach Fertigstellung des zu erzeugenden Objektes wieder in ihre ursprüngliche Form beim Einlegen in die Maschine zurückgeführt werden kann, falls dies erwünscht ist. Es sei festgehalten, dass unter Hülle diejenigen Teile der Kartusche verstanden werden, die den Innenraum nach außen hin begrenzen; gegebenenfalls vorhandene, zusätzliche Komponenten, die in dem Innenraum beweglich sind - wie z.B. ein Stempel, eine Rakel oder Ventilteile - gehören nicht zu der Hülle im Sinne der vorliegenden Erfindung.

Die Erfindung gestattet daher auch eine effizientere und variable Aufbewahrung der fotosensitiven Substanz innerhalb der Stereolithographie-Anlage, sowie ein schonendes Trennen der erzeugten Schichten von der Referenzfläche. Weitere Vorteile sind die verbesserte und einfachere Steuerung der Relativbewegung des Trägers der erzeugten Schichten bzw. des erzeugten Objektes relativ zur Referenzfläche, sowie die vereinfachte Belieferung und Handhabung von fotosensitivem Material in der Stereolithographie-Vorrichtung.

Die Kartusche kann zudem mit einem Informationsträger ausgestattet sein, über den auf die Menge, die Art, den Zustand und Prozessparameter rückgeschlossen werden kann. Dem entsprechend kann eine Kartuscheneinrichtung einen Informationsträger beinhalten, der Information betreffend die fotosensitiven Substanz, insbesondere hinsichtlich Menge, Art und/oder Zustand derselben, und/oder Prozessparameter eines Vorgangs der Herstellung eines dreidimensionalen Objektes hält und/oder an die Stereolithographie-Vorrichtung, beispielsweise einer Steuereinrichtung derselben, übermittelt. Der Informationsträger kann z.B. ein Aufdruck, ein Barcode, ein RFID-Chip, ein Magnetstreifen od.dgl. sein.

Wie bereits erwähnt ist es vorteilhaft, wenn die Kartuscheneinrichtung in eine Stereolithographie-Vorrichtung der hier offenbarten Art lösbar einsetzbar ist. In einer vorteilhaften Weiterbildung der Erfindung kann die Kartuscheneinrichtung an dem Objektträger lösbar befestigbar bzw. befestigt sein, um ein Auswechseln der Kartusche zu erleichtern.

Der verformbare Bereich der Hülle kann einstückig gebildet sein, vorzugsweise aus einem biegsamen Material, kann aber bei Bedarf auch mehrteilig sein. So kann ein Mantelteil der Kartusche aus einem Folienschlauch (z.B. FEP- oder PTFE-Folie) bestehen, während der Boden der Kartusche, in dem sich z.B. ein transparenter Bodenteil (im einfachsten Falle zumindest ein Glasstück) befindet, ein einfacher Spritzgussteil aus geeignetem Kunststoff ist, ebenso wie der verschließende Oberteil der Kartusche. Der Bodenteil oder der Oberteil kann je nach Ausführung die Referenzfläche beinhalten.

Des Weiteren kann das Volumen des Innenraums zum überwiegenden Teil, vorzugsweise zur Gänze, von dem Aufnahmeraum gebildet sein. Die Referenzfläche befindet sich entweder am Boden (bzw. der Deckfläche) des Aufnahmeraums oder wird durch eine geeignete Oberfläche im Aufnahmeraum definiert, z.B. eine Membran, eine Grenzfläche zwischen zwei (beispielsweise übereinander geschichteten) Flüssigkeiten oder zumindest einer fotosensitiven Substanzen mit unterschiedlichen Zuständen im Aufnahmeraum. Die Hülle ist vorteilhafterweise so ausgestaltet, dass der umschlossene Innenraum ein während einer Verformung der Hülle im Wesentlichen gleich bleibendes Volumen aufweist. In vielen Ausführungsformen ist die Verformbarkeit der Hülle so ausgelegt, dass eine reversible Stauchung in Bezug auf eine Höhe der Kartuscheneinrichtung gestattet ist. In den meisten Fällen ist die stauchende Verformung die vorrangig gewünschte, und daher kann in diesen Fällen die Verformbarkeit auf eine solche reversible Stauchung eingeschränkt sein. Die Stauchung (oder die dieser entgegengesetzte Streckung) kann beispielsweise durch eine Relativbewegung zwischen einer Grundplatte der Trägereinrichtung und einer Halteeinrichtung, die ein der Grundplatte gegenüber liegendes Ende der Kartuscheneinrichtung hält, erzeugt werden; im Allgemeinen sind zwei Enden der Kartuscheneinrichtung in der Trägereinrichtung durch je ein Haltemittel gehalten und die Stauchung bzw. Streckung der Kartuscheneinrichtung erfolgt durch eine Relativbewegung der Haltemittel zueinander.

In vielen Ausführungsformen kann die Hülle eine geometrische Form aufweisen, die in sich faltbar ist. Zusätzlich oder alternativ dazu kann die Hülle über mindestens eine Referenzfläche verfügen, die starr, teilweise flexibel und oder vollständig flexibel ausgeführt sein kann. Es ist günstig, wenn die in der Hülle ausgebildete Referenzfläche im Raum beliebig bewegt oder verformt werden kann.

Die Hülle kann vorteilhafterweise so geformt sein, dass sie einen Boden, einen Oberteil und einen den Boden und den Oberteil verbindenden Mantel aufweist, wobei vorzugsweise der Mantel verformbar ist. Der Boden der Hülle kann mindestens einlagig starr oder flexibel ausgeführt sein und/oder aus mehreren Materialien bestehen.

Gemäß einem weiteren Weiterbildungsaspekt der Erfindung kann der Boden der Hülle und/oder der Mantel zumindest einen perforierbaren Bereich, vorzugsweise geschwächte(n) Bereich(e), aufweisen, zum Ausbilden zumindest einer Öffnung für ein Zu- oder Abführen einer fotosensitiven Substanz und oder das Zu- oder Abführen von Lösungsmittel zu bzw. aus dem Innenraum.

Die Hülle der erfindungsgemäßen Kartuscheneinrichtung kann einen geschlossenen und für die fotosensitive Substanz undurchlässigen, mindestens einteilig gebildeten Boden sowie Seitenwände aufweisen. Diese können jedoch für Gase oder Gasgemische permeabel ausgeführt sein. In diesem Sinne ist es günstig, wenn der erwähnte Mantel für Gase oder Gasgemische, insbesondere für Sauerstoff oder Luft, durchlässig (permeabel) ausgebildet ist. Auch kann der Boden in dieser Art gasdurchlässig sein.

Des Weiteren kann die Hülle an der Oberseite und/oder seitlich eine verschließbare Öffnung aufweisen, durch die fotosensitive Substanz in den Innenraum zuführbar und aus diesem ableitbar ist. Die Hülle kann insbesondere auch seitliche Öffnungen bzw. Öffnungsfortsätze aufweisen. Hierbei kann die Hülle Dichtungselemente zum Abdichten der Öffnung aufweisen. Die Hülle kann somit über Dichtelemente an der oberen Öffnung sowie an der Unterseite verfügen. Außerdem kann die Öffnung durch ein Verschlusselement verschließbar sein, welches vorzugsweise einstückig ausgeführt ist, wobei das Verschlusselement vorzugsweise als Träger der ausgehärteten Schichten der fotosensitiven Substanz ausgebildet ist.

Die ein- oder mehrteilig gebildete Kartusche kann geometrische, mechanische oder magnetische Elemente umfassen, die über eine Fixierung mit zumindest einem Element verbunden werden können, welches in der Lage ist eine relative Bewegung durchzuführen. Des Weiteren kann eine vorteilhafte Weiterbildung der Kartuscheneinrichtung eine in dem Innenraum bewegliche Komponente aufweisen, die über Führungen geometrischer, mechanischer und/oder magnetischer Art in der Kartuscheneinrichtung geführt ist. In der Hülle bewegliche Komponenten dieser Art können z.B. Rakel, Stempel, als Ventile dienende Klappen od.dgl. sein.

Eine Ausgestaltung der Erfindung sieht vor, dass die Kartuscheneinrichtung einen den Innenraum nach oben begrenzenden und abschließenden Verschlussteil aufweisen kann, wobei dieser Verschlussteil auswechselbar sein und vorzugsweise insgesamt steif sein kann. Dieser Verschlussteil kann geeignet geformte geometrische Aussparungen, d.s. Ausnehmungen oder Öffnungen, in einer dem Innenraum der Kartusche zugewandten Fläche aufweisen. Durch Aussparungen dieser Art kann z.B. fotosensitive Flüssigkeit aus der Kapsel in den Innenraum der Hülle vordringen. Eine andere vorteilhafte Anwendung von Aussparungen ist, das Anhaften des dreidimensionalen Objekts an der als Träger dienenden Fläche zu verbessern. Der Verschlussteil kann darüber hinaus einstückig oder mehrteilig ausgeführt sein. Durch geeignete geometrische Gestaltung des Verschlusselementes kann mindestens ein Bereich vorgesehen sein, in welchem fotosensitives Harz oder Harze direkt oder indirekt aufbewahrt werden können.

Günstiger Weise kann das Verschlusselement ermöglichen, dass mindestens ein mit fotosensitiven Harz gefülltes Objekt untergebracht werden kann, welches bevorzugt perforierbar ausgeführt ist. Dem entsprechend kann es günstig sein, wenn der Bereich zur Aufnahme eines Behälters einer fotosensitiven Substanz eingerichtet ist, wobei vorzugsweise Mittel zum Perforieren des Behälters vorgesehen sind.

Darüber hinaus kann der Verschlussteil mindestens einen integrierten Kolben aufweisen, durch dessen Hubbewegung das Austreten der fotosensitiven Substanz dosierbar ist. Der Kolben kann zudem Einrichtungen zum Perforieren oder Öffnen eines in dem Verschlussteil befindlichen Behälters aufweisen, insbesondere eines Behälters mit fotosensitiver Substanz. Der mindestens eine Kolben kann daher in der Lage sein, zeitabhängig mindestens ein beutelartiges Element zu beschädigen, um fotosensitives Material freizusetzen.

Zusätzlich kann der Kolben Einrichtungen zum Zuführen eines Lösungsmittels und/oder eines Gases oder einer Gasmischung, insbesondere Stickstoff oder Luft, aufweisen.

Darüber hinaus kann die Kartuscheneinrichtung vorteilhafterweise einen für Sauerstoff durchlässigen, einstückig oder mehrstückig ausgebildeten Boden umfassen.

Um ein Ablösen des hergestellten dreidimensionalen Objekts zu erleichtern, kann in der erfindungsgemäßen Vorrichtung zudem eine Einrichtung zur Erzeugung von Vibrationen vorgesehen sein.

Die erfindungsgemäße Stereolithographie-Vorrichtung kann zum Einsetzen von einer, zwei oder mehr Kartuschen vorgesehen sein. Insbesondere können mehrere Kartuscheneinrichtungen in die Vorrichtung einsetzbar sein.

Weitere Einzelheiten und Vorzüge der Erfindung gehen aus der nachstehenden Beschreibung mehrerer Ausführungsbeispiele hervor, die in den beigefügten Zeichnungen dargestellt sind und die nicht einschränkend für die Erfindung sind. Die Zeichnungen zeigen in schematischer Form:
- Fig. 1: zeigt eine perspektivische Ansicht einer Stereolithographie-Vorrichtung gemäß einem Ausführungsbeispiel der Erfindung;
- Fig. 2: eine Explosionsdarstellung einer Kartuscheneinrichtung, die in der Vorrichtung der Fig. 1 eingesetzt werden kann;
- Fig. 2a: die Kartuscheneinrichtung der Fig. 2 in zusammengefügtem Zustand;
- Fig. 3: eine perspektivische Ansicht einer ersten Ausführungsform eines Kartuschen-Verschlussteils mit einem Träger und darin einzusetzender Kapsel;
- Fig. 4: einen Längsschnitt des Verschlussteils der Fig. 3;
- Fig. 5: eine perspektivische Ansicht des Verschlussteils der Fig. 1 mit eingesetzter Kapsel;
- Fig. 6: einen Längsschnitt des Verschlussteils der Fig. 5;
- Fig. 7: eine perspektivische Ansicht einer zweiten Ausführungsform eines Verschlussteils;
- Fig. 8: einen Längsschnitt des Verschlussteils der Fig. 7;
- Fig. 9: den Verschlussteil der Fig. 7 und 8 mit entnommenem Pfropfen;
- Fig. 10: zeigt eine aus mehreren Komponenten zusammengesetzte Ausführungsform eines Verschlussteils in einer perspektivischen Ansicht;
- Fig. 11: einen Längsschnitt des Verschlussteils der Fig. 10 in zusammengefügtem Zustand;
- Fig. 12 und 13: den Verschlussteil der Fig. 10 und 11 mit betätigtem Kolben;
- Fig. 14a-14d: mehrere Ausführungsvarianten der Hülle der erfindungsgemäßen Kartuscheneinrichtung;
- Fig. 15: ein Kartuschen-Verschlussteil mit darauf angebrachten Informationsträgern;
- Fig. 16a-16d: illustrieren anhand einer Abfolge von vier Stadien die Erzeugung einer ausgehärteten Schicht der fotosensitiven Substanz unter Verwendung einer erfindungsgemäßen Kartuscheneinrichtung;
- Fig. 17: eine weitere Ausführungsform eines Kartuschensystems;
- Fig. 18: noch eine Ausführungsform eines Kartuschensystems; und
- Fig. 19a u. 19b: illustrieren das Auswechseln einer Kapsel des Verschlussteils.

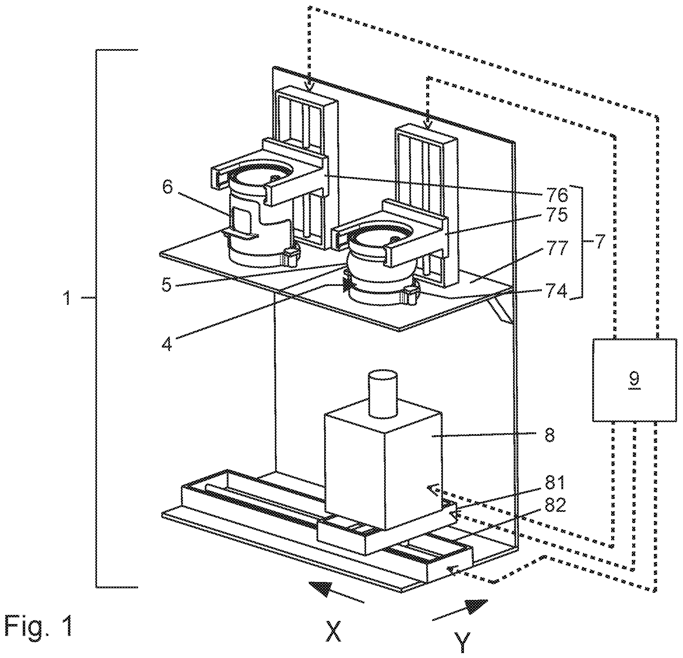

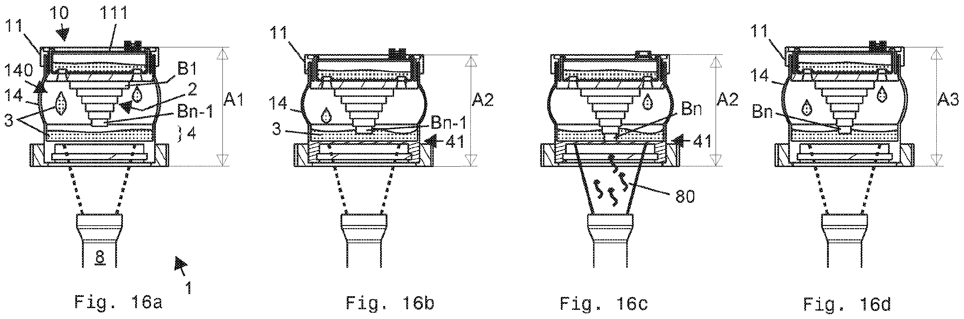

Fig. 1 zeigt eine beispielhafte Übersicht eines Ausführungsbeispiels einer erfindungsgemäßen Stereolithographie-Anlage 1 für das generative Fertigen eines oder mehrerer dreidimensionaler Objekte 2 (Fig. 16a-16d) aus einzelnen Schichten, welche aus einer fotosensitiven Substanz innerhalb jeweils einer Kartuscheneinrichtung 5, 6 ausgehärtet werden. Dabei ist die fotosensitive Substanz in einem Aufnahmeraum 4 innerhalb der Kartuscheneinrichtung 5, 6 durch aktinische Strahlung aushärtbar. Im Rahmen dieser Offenbarung ist mit "aktinischer Strahlung" jene (in der Regel elektromagnetische) Strahlung gemeint, die zum Auslösen der gewünschten Aushärtungsreaktion der fotosensitiven Substanz geeignet ist, insbesondere Lichtstrahlung wie z.B. UV-Licht. Die fotosensitive Substanz ist in der Regel flüssig, wobei im Rahmen dieser Offenbarung der Begriff "flüssig" sich auf Flüssigkeiten mit beliebiger Viskosität, einschließlich Suspensionen und pastöse Substanzen, bezieht.

Eine oder mehrere Kartuscheneinrichtungen 5, 6 werden mithilfe von jeweils zugeordneten Aufnahmeeinrichtungen 75, 76 gehalten und sind auf einer Grundplatte 77 angeordnet. Die Grundplatte 77 bildet zusammen mit den Aufnahmeeinrichtungen 75, 76 einschließlich der zugehörenden Antriebe und gegebenenfalls weiteren (in Fig. 1 nicht gezeigten) Komponenten die Trägereinrichtung 7 der Erfindung.

Eine steuerbare Lichtquelle 8 ist z.B. unterhalb der Grundplatte 77 angeordnet und dort mithilfe von Schrittmotoren-betriebenen Linearantrieben 81, 82 horizontal positionierbar, vorzugsweise in zwei Richtungen (X und Y). Die Lichtquelle 8 ist so relativ zu der zumindest einen Kartuscheneinrichtung 5, 6 beweglich ausgeführt, und wird auf diese Weise unter der Kartuscheneinrichtung 6, in der ein Aufbauprozess eines Objektes 2 stattfinden soll, positioniert. In einer Variante kann die Stereolithographie-Anlage auch einen drehbar gelagteren Spiegel umfassen, über den mittels weiterer Umlenkspiegel das von der Lichquelle 8 ausgesandte Licht durch Auslenken des drehbar gelagerten Spiegels zu mehreren Kartuscheneinrichtungen geleitet werden kann.

Jede Aufnahmeeinrichtung 75, 76 ist gegenüber der Grundplatte 77 bzw. dem Boden des Kartuschensystems 5, 6 in der Höhe verstellbar, beispielsweise durch einen Schrittmotorantrieb. Die Aufnahmeeinrichtung 75, 76 ist vorteilhafterweise dazu eingerichtet, dass sie die darin gehaltene Kartuscheneinrichtung aufnehmen, zentrieren, und in einer bestimmten Position relativ zur Grundplatte festhalten kann; vorzugsweise hält die Aufnahmeeinrichtung 75, 76 den Oberteil (Verschlussteil) der Kartuscheneinrichtung und kann so durch Bewegung gegenüber der Grundplatte die Höhe der Kartuscheneinrichtung einstellen und so diese stauchen. Die Trägereinrichtung 7 kann außerdem für eine oder jede der Kartuscheneinrichtungen 5, 6 ein Befestigungselement 74 aufweisen, beispielsweise einen Körper der eine formschlüssige Arretierung ermöglicht; mittels des Befestigungselements 74 kann der Unterteil des Kartuschenssystems 5, 6 zumindest für die Dauer des Entwicklungsvorgangs festgelegt werden. Eine Steuereinrichtung 9, beispielsweise ein Steuercomputer, steuert die Bewegung der Einrichtungen 75, 76, 81, 82, sowie die Abläufe des Herstellungsprozesses in der Anlage 1, einschließlich der Aktivität der Lichtquelle 8; gegebenenfalls empfängt und verarbeitet die Steuereinrichtung auch Mess- und/oder Sensorsignale, die von Sensoren in den Kartuschen 5, 6 aufgenommen werden.

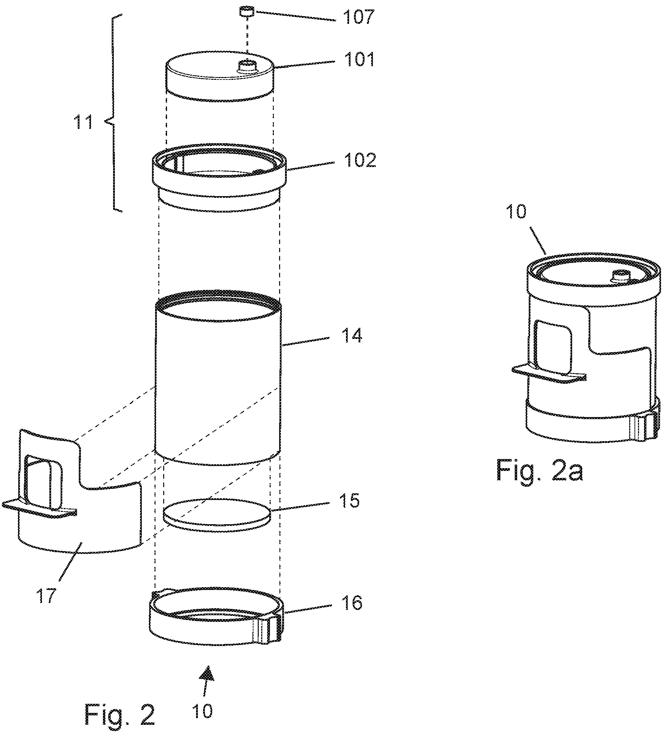

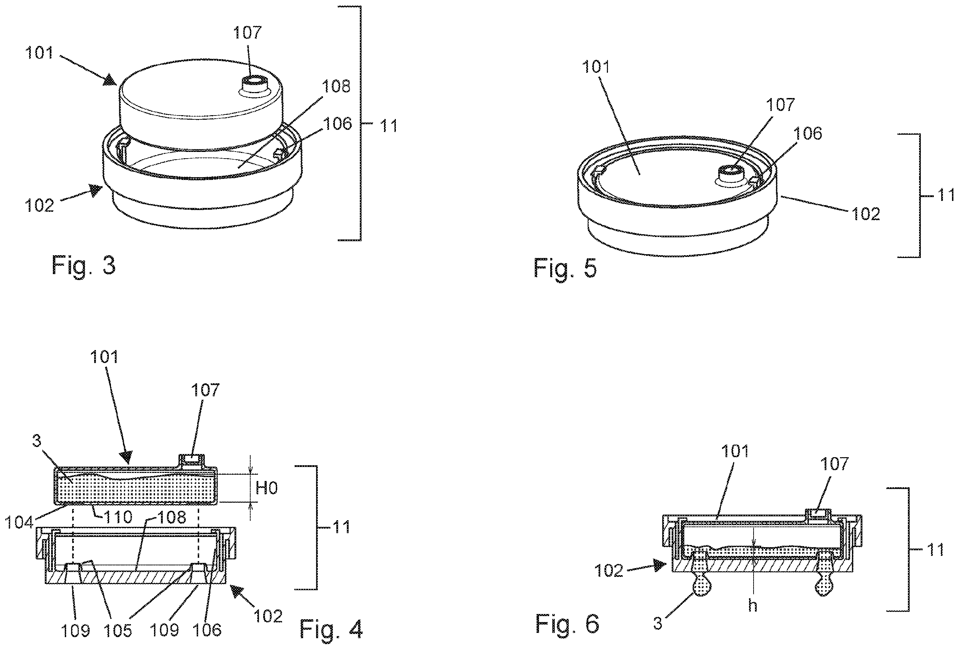

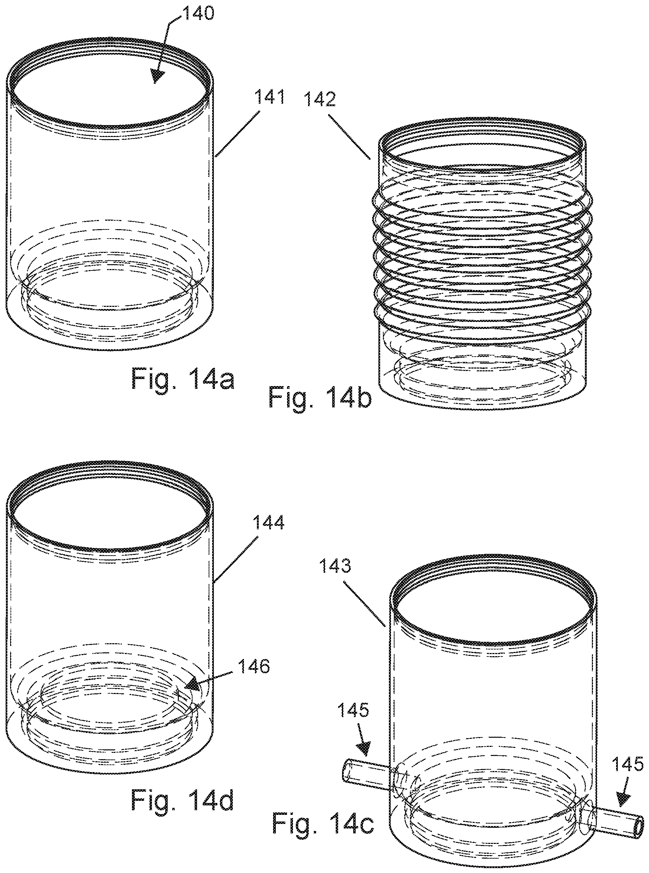

In Fig. 2 ist ein Kartuschensystem 10 in einer isometrischen Explosionsansicht (in Z-Richtung aufgelöst) als Ausführungsbeispiel einer erfindungsgemäßen Kartuscheneinrichtung dargestellt, die in der Stereolithographie-Vorrichtung der Fig. 1 eingesetzt werden kann; Fig. 2a zeigt das Kartuschensystem 10 in assemblierter Form. Das Kartuschensystem 10 der gezeigten Ausführungsform umfasst beispielsweise einen Verschlussteil 11, der z.B. mit dem nachstehend in Fig. 3-6 beschriebenen Verschlussteil bauartgleich sein kann, eine Hülle 14 (z.B. bauartgleich mit der Hülle 141 der Fig. 14a) sowie einen zusätzlichen Boden 15, der vorzugsweise zumindest teilweise strahlungsdurchlässig für aktinische Strahlung ist, einen Arretierungsteil 16, und ein Kartuschenversteifungsteil 17. Natürlich können der Verschlussteil, die Hülle samt Boden sowie der Arretierungsteil auch gemäß den anderen hier offenbarten Ausgestaltungen oder weiteren Ausführungsformen, die der Fachmann im Rahmen der Erfindung auffinden kann, verwirklicht sein.

Der Arretierungsteil 16 dient einer zusätzlichen Versteifung der Hülle 14; zudem kann dieser Bauteil 16 eine Referenzierung, Zentrierung, kraftschlüssige und/oder formschlüssige Befestigung des zumindest teilweisen flexiblen Kartuschensystems 10 in der Stereolithographie-Vorrichtung 1 (Fig. 16) ermöglichen. Des Weiteren verhindert der Arretierungsteil 16 ein Ausbeulen, Verformen, Knicken und/oder Abheben des unteren Kartuschenbereiches.

Um das zumindest teilweise flexible Kartuschensystem 10 sicher außerhalb und innerhalb der Stereolithographieanlage 1 handhaben zu können, kann das Kartuschensystem 10 ein Kartuschenversteifungsteil 17 aufweisen, das beispielsweise zumindest halbschalig ausgeführt und an die Geometrie der flexiblen Hülle 14 des Kartuschensystems 10 angepasst ist. Mithilfe des Kartuschenversteifungsteil 17 wird eine gewünschte Höhe des Kartuschensystems 10 festgelegt. Der Kartuschenversteifungsteil 17 kann auch so gestaltet sein, dass ein Abziehen von dem Kartuschensystem 10 auf leichte Weise ermöglicht ist; dies kann z.B. durch einen Griff oder Fenster erreicht werden. Bevorzugt ist der Kartuschenversteifungsteil 17 so ausgebildet, dass er an zumindest einem Ende mit dem Arretierungsteil 16, der Hülle 14 und/oder dem Verschlussteil 11 eine lösbare formschlüssige oder kraftschlüssige Verbindung eingehen kann, beispielsweise durch Aufklemmen des Teils 17 nach Art eines Clips.

Fig. 3 zeigt in einer Schrägansicht von oben seitlich eine erste Ausführungsform des Verschlussteils 11, mit einem Träger 102 der erzeugten Schichten (diese werden wie erwähnt an der Unterseite des Trägers aufgebaut), in den zudem zumindest eine Kapsel 101 eingelegt werden kann. Die Kapsel 101 ist noch oberhalb des Trägers 102 gezeigt, in einem noch nicht eingelegten und unperforierten Zustand. In der Kapsel 101 befindet sich mindestens eine fotosensitive Substanz, die z.B. eine Flüssigkeit mit beliebiger Viskosität oder pastöser Konsistenz sein kann. Die Kapsel 101 wird von einem Kapselverschlusselement 107 verschlossen. Dieses Verschlusselement 107 kann auch als Überdruckventil ausgeführt sein oder ein solches Ventil enthalten. In einer (nicht gezeigten) Variante der Kapsel 101 kann diese selbst ein Überdruckventil aufweisen.

Fig. 4 zeigt eine Schnittansicht (Längsschnitt entlang der Mittelachse) der Kapsel 101 und des Trägers 102. Die (nicht perforierte) Kapsel 101 enthält eine bestimmte Menge der fotosensitiven Substanz 3 mit einem Ausgangs-Füllstand H0. Der Träger 102 verfügt über zumindest eine Öffnung 109, durch die die aus der Kapsel 101 austretende fotosensitive Substanz 3 in den Bereich unter dem Träger 102 gelangen kann. Die Kapsel 101 weist in dieser Ausführungsform an ihrer Unterseite 110 einen oder mehrere Bereiche 104 mit geringerer Wandstärke auf. Diese geschwächten Bereiche 104 sind zur Perforierung durch vorspringende Ausprägungen 105 des Trägers 102 vorgesehen. Diese Vorsprünge 105 befinden sich auf der Auflagefläche 108 des Trägers für die Kapsel 101 und sind beispielsweise als erhabene Ränder ausgebildet, die jeweils eine nach außen führende Öffnung 109 umgeben. Die Kapsel 101 kann beim Einlegen in den Träger 102 durch ein oder mehrere, vorzugsweise einrastende Haltemittel 106 fixiert werden, die beispielsweise als zurückfedernde Schnapphaken 106 ausgebildet sein können. Dadurch kann die Kapsel 101 von oben in den Träger 102 eingelegt werden und gleichzeitig perforiert werden.

Es versteht sich, dass die Kapsel 101 auch auf andere Weise im Träger 102 fixiert werden kann, beispielsweise durch einen Bajonettverschluss oder einen zusätzlichen Teil, der nach dem Einlegen der Kapsel eingesetzt wird und letztere durch Einrasten in den Träger fixiert; auch kann die Kapsel 101 ein Gewinde aufweisen und in den Träger 102 eingeschraubt werden.

In einer Ausführungsvariante kann die Perforierung auch durch einen zusätzlich auf der Auflagefläche 108 vorgesehenen Teil, beispielsweise einer Schneide oder einer Spritzennadel, erfolgen. In einer weiteren Ausführungsvariante ist die Kapsel mehrteilig ausgestaltet, wobei die Unterseite 110 der Kapsel 101 zumindest bereichsweise aus einem Material gebildet ist, das leicht zu perforieren ist, wie z.B. einer Folie. Die Kapsel 101 kann hierbei durch Perforieren der Folie oder durch Abziehen der Folie von einem mit der Folie überzogenen Bereich der Unterseite 110 geöffnet werden.

In einer weiteren, nicht gezeigten Ausführungsform weist der Träger 102 einen Zahnkranz oder eine Verzahnung auf, die beispielsweise auf den seitlichen Flächen (stirnradartig) ausgebildet ist. Dies gestattet eine Drehung gegenüber dem Boden der Kartuschenhülle um einen kleinen Winkel α (griechischer Buchstabe alpha) von wenigen Winkelgrad. Durch diese Drehung kann die zum Ablösen des hergestellten Objekts von der Referenzfläche benötigten Kräfte wesentlich verringert werden.

Fig. 5 zeigt eine Schrägansicht des Trägers 102 mit darin eingesetzter Kapsel 101, wodurch der Kartuschenverschlussteil 11 gebildet ist.

Fig. 6 ist eine Schnittansicht (Längsschnitt entlang der Mittelachse) des Kartuschenverschlussteils 11. Infolge der Perforierung der Kapsel 101 durch die Vorsprünge 105 kann die fotosensitive Substanz 3 durch die im Träger 102 vorgesehenen Öffnungen 109 austreten. Dabei sinkt der Füllstand wie in Fig. 6 dargestellt von dem Ausgangs-Füllstand H0 (Fig. 4) auf einen Stand h ab.

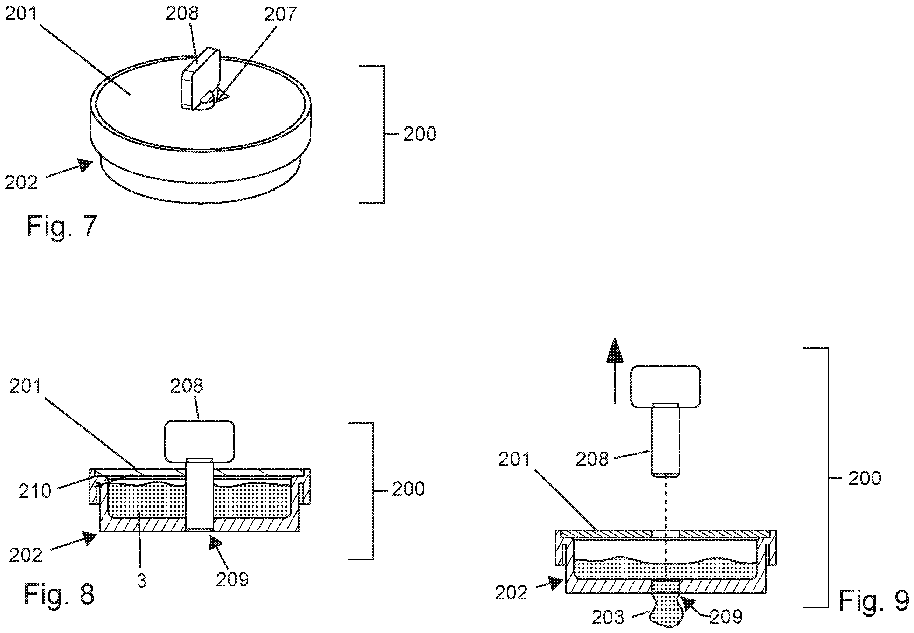

Fig. 7 und 8 zeigen in je einer Schrägansicht und Schnittansicht (entsprechend denen der Fig. 5 und 6) eine zweite Ausführungsform des Kartuschenverschlussteiles 200, mit einem Träger 202, einem Deckel 201 und einem Pfropfen 208. Der Träger 202 enthält die fotosensitive Substanz 3. Eine in der Bodenfläche des Trägers 202 gebildete Öffnung 209 wird durch den Pfropfen verschlossen. Der Pfropfen 208 weist ein Griffelement oder eine Lasche auf und ist durch eine Öffnung 207 des Deckels 201 nach oben ausgeführt; er dichtet in eingesetztem Zustand den Deckel 201 sowie den Träger 202 gegen Austritt der fotosensitiven Flüssigkeit 3 ab, wobei die Dichtwirkung in den Öffnungen 207, 209 durch materialschlüssiges Einstecken, durch Einschrauben oder durch zusätzliche geometrische Ausprägungen, sowie zusätzlichen Bauteilen wie O-Ringen, Dichtelementen od.dgl. erreicht werden kann. Der Deckel 201 verschließt den Innenraum des Trägers 202, beispielsweise durch kraftschlüssige und/ oder formschlüssige, jedoch dichte Verbindung 210.

Fig. 9 zeigt, wie die fotosensitive Substanz 3 nach dem Entfernen des Pfropfens 208 dem Träger 202 durch die bodenseitige Öffnung 209 austritt. Um den Austritt der fotosensitiven Flüssigkeit 3 zu erleichtern, kann die Geometrie der Öffnung 209 für diese Zwecke in geeigneter Weise geformt sein. Zusätzlich können der Träger 202 und der Deckel 201 innenseitig, an den mit der fotosensitiven Substanz 3 in Kontakt kommenden Flächen, mit einem Material beschichtet sein, dass dafür sorgt, dass möglichst wenig der fotosensitiven Substanz 3 im Innenraum des Trägers 202 nach der Entleerung verbleibt. Dies kann beispielsweise durch eine Beschichtung mit FEP, PTFE (Teflon) oder anderen Stoffen, welche die Oberflächenspannung bzw. Benetzung herabsetzen, erzielt werden. Diese Variante ermöglicht eine einfache Wiederbefüllung des Hohlraumes sowie eine einfache Reinigung. Vorteilhafterweise kann der Pfropfen 208 so gestaltet sein, dass ein Wiederverschließen und Befüllen durch die Öffnung 207 möglich ist.

Der Pfropfen 208 könnte zudem über Befüllungskanäle (nicht gezeigt) verfügen, welche ein Befüllen des Hohlraums durch den Pfropfen ermöglichen; hierzu können die Befüllungskanäle als von oben eingesetzte Bohrungen, die oberhalb des unteren Ende des Pfropfens auf seitliche Bohrungsöffnungen treffen (umgekehrte L- oder T-Form des Kanals), ausgebildet sein. Alternativ kann der Deckel 201 eine zur Befüllung geeignete, verschließbare gesonderte Öffnung (nicht gezeigt) aufweisen.

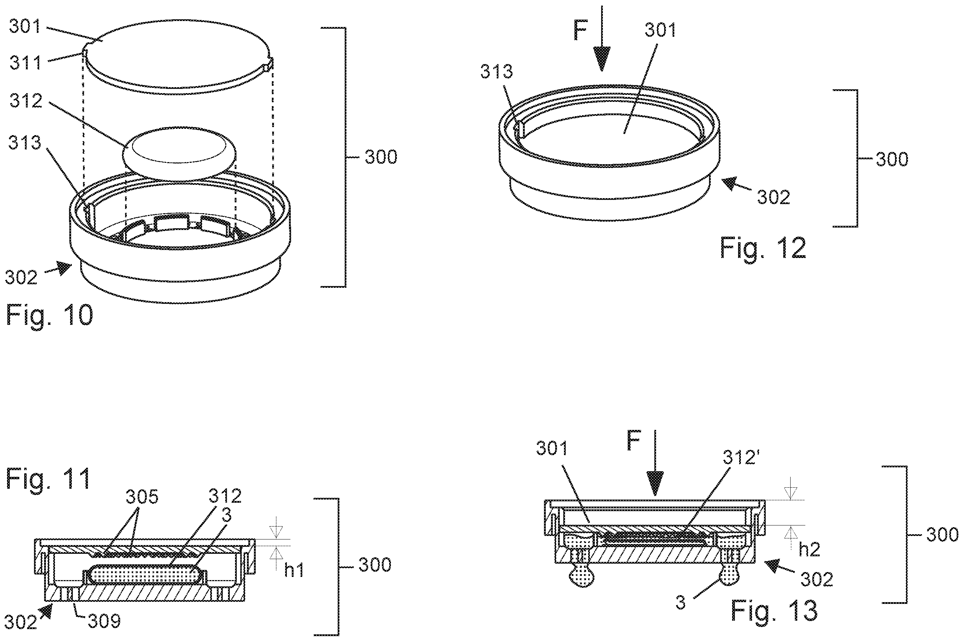

In Fig. 10 und 11 ist eine dritte Ausführungsform des Verschlussteiles 300 gezeigt, in der ein Stempel oder Kolben 301 innerhalb des Trägers 302 geführt ist. Die Führung des Kolbens 301 geschieht vorzugsweise mit Hilfe von Führungselementen 311 und 313, beispielsweise in Form von Vorsprüngen oder Nasen 311, die in Führungsnuten 313 an der Innenseite des Trägers 302 eingreifen; diese können so als Zentrierung, Führung und Verdrehsicherung dienen. Der Kolben 301 kann des Weiteren so ausgeführt sein, dass er auch aus dem Träger 302 entfernt werden kann. Diese Ausführungsform ermöglicht eine Wiederbestückung des Verschlussteiles 300 mit einem beutelartigen Behälter 312, der mit einer fotosensitiven Substanz 3 gefüllt ist. Der Behälter 312 besteht zumindest teilweise aus einem perforierbaren Material, das bevorzugt auch undurchlässig für Licht ist (z.B. eine Kunststofffolie oder beschichtete Aluminiumfolie). Der Kolben 301 weist auf der dem Behälter 312 zugewandten Seite an der inneren Oberfläche ausgebildete Elemente 305 auf, z.B. in Form von Nadeln, Zähnen oder Schneiden, welche eine Perforierung des beutelartigen Behälters 312 gezielt ermöglichen; ergänzend oder alternativ kann auch der Träger 302 selbst über derartige Perforierungsmittel verfügen. Die Perforierung kann auch gesteuert von außen erfolgen, beispielweise durch einen nadelartigen Körper. Der mit fotosensitiver Substanz 3 gefüllte Behälter 312 kann in einer weiteren Ausführungsvariante mehrere Sektionen aufweisen, die jeweils mit einem fotosensitiven Material gefüllt sind. Durch einen externen, beispielsweise gesteuerten Perforierkörper können so in gezielter Abfolge die einzelnen Sektionen perforiert werden.

Wie ebenfalls in Fig. 10 und 11 erkennbar ist, kann der Träger 302 zudem derart gestaltet sein, dass er das beutelartige Objekt 312 in sich aufnehmen kann und auch in seiner Lage fixieren bzw. zentrieren kann. Hierzu kann ein Bereich zur Aufnahme des Beutels 312 mit einem Rand oder einer Anzahl von Laschen umgeben sein. Die Schnittansicht der Fig. 10 zeigt den mehrteilig gebildeten Verschlussteil 300 mit dem im Träger 302 gehaltenen beutelartigen Objekt 312 in der Ausgangstellung mit der Kolbenposition h1 (gemessen als Abstand von der Oberkante des Trägers 302).

Die Schrägansicht der Fig. 12 und die entsprechende Schnittdarstellung der Fig. 13 zeigen den Verschlussteil 300 in einem Zustand mit dem Kolben 311 in dessen Endposition h2. Ausgehend von der Ausgangsstellung h1 kann eine beliebige Stellung zwischen den Positionen h1 und h2 des Kolbens 301 und schließlich die Endstellung h2 durch Einwirken einer äußere Kraft F erreicht werden. Als (nicht dargestellte) Variante, wenn der Kolben drehbar im Träger 302 über eine z.B. schraubenartige Führungskurve oder ein Gewinde mit einer bestimmten Steigung verfügt, kann der Kolben auch durch Anwenden einer Umfangskraft (zum Erzeugen eine Drehbewegung) bewegt werden.

Bei der Bewegung aus der Ausgangsstellung h1 zur Stellung h2 hin wird der Beutel 312 durch die perforierenden Elemente 305 angestochen und dadurch geöffnet. In der in Fig. 12 gezeigten Position h2 hat der perforierte Beutel 312' die fotosensitive Substanz 3 abgegeben; diese läuft daher in den Innenraum des Trägers 302 aus, von wo sie durch dafür vorgesehene Öffnungen 309 aus dem Träger 302 austritt. In einer bevorzugten Ausgestaltung kann vorgesehen sein, dass der Kolben 301 im Zusammenspiel mit dem Träger 302 so gestaltet ist, dass er neben der Perforierung auch ein Zusammenpressen des Behälters 312 und somit eine weitgehend vollständige Entleerung des letzteren ermöglicht. Es versteht sich, dass der Kolben 301 nicht zwingend ein Teil des Verschlussteiles 300 sein muss; außerdem kann der Kolben im Allgemeinen mehrteilig ausgeführt sein, d.h. in mehrere Teilkolben aufgeteilt sein, so dass diese mehrfachen Kolben unabhängig voneinander bewegt werden können.

In Fig. 14a-14d sind einige Beispiele von Gestaltungsvarianten 141, 142, 143, 144 der erfindungsgemäß zumindest teilweise flexiblen Hülle der erfindungsgemäßen Kartuscheneinrichtung in schematischen Schrägansichten dargestellt. Die Hülle ist beispielsweise einteilig ausgeführt, kann jedoch auch aus zwei oder mehr Komponenten zusammengesetzt sein. Die Grundgeometrie der Hülle 14, 141-144 kann jede beliebige geometrische Ausprägung aufweisen, je nach gewünschtem Anwendungsbereich, die einen Innenraum 140 umgibt; beispielsweise kann die Hülle eine zylindrische oder prismatische Form aufweisen, mit kreisförmigem, ovalem, quadratischem oder rechteckigem Grundriss; die Kanten des Grundrisspolygons können zudem gerundet sein. Bevorzugter Weise hat die Hülle eine becherartige Grundform, wobei sie einen Boden und einen Mantel umfassen kann. Hierbei bildet der Mantel ein seitliche Wand, die den Boden und einen Oberteil verbindet; hierbei kann der Oberteil ein Teil der Hülle oder durch eine zusätzliche Komponente, wie z.B. ein Verschlussteil 11, 200, 300, 400, gebildet sein. Insbesondere sind bevorzugte Gestaltungen der Hülle rotationssymmetrisch ausgeführt, oder mit zumindest teilweise kastenförmigem Grundriss.

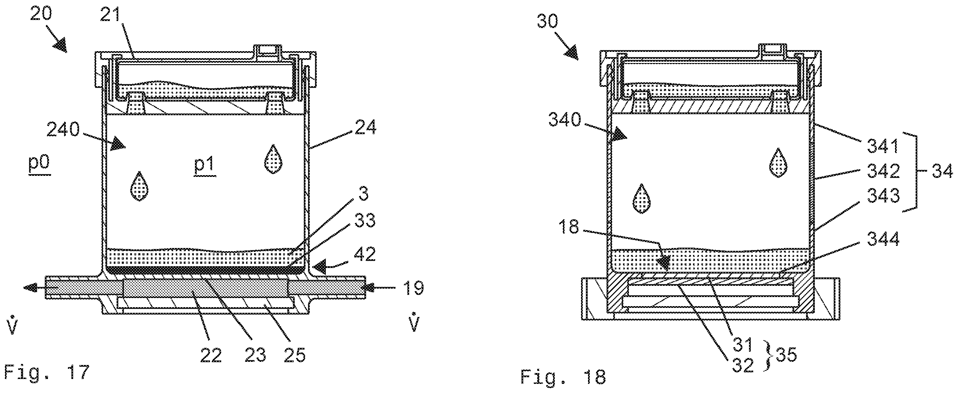

Beispielsweise kann die Hülle 141 einen Mantel mit glatter Außen- und Innenfläche aufweisen, wie in Fig. 14a dargestellt. Eine komplexere Hüllgeometrie ist ebenfalls möglich, wie in 14b und 14c dargestellt ist. Fig. 14b zeigt z.B. eine Balgen-artige Faltung des Mantels der Hülle 142, was eine leichtere Faltung der Hülle 142 erlaubt. Die Hülle 142 weist eine Mantelgeometrie auf, die sektionsweise die Funktion eines Faltenbalges aufweist. In anderen (nicht gezeigten) Beispielen kann der Mantel der Hülle kegelförmig, trapezförmig, zusammenlaufend gestaltet sein, um ein Falten der Hüllgeometrie zu erleichtern. Dabei weist die Hülle zumindest eine Öffnung und oder geeignet ausgebildet Ansätze und/oder Öffnungen auf. Fig. 14c zeigt ein Beispiel einer im Grundkörper rotationssymmetrisch einstückig gebildeten Hülle 143, welche über einen Boden mit einer oder mehreren Öffnungen verfügt, in die ein zusätzlicher Bauteil 145 und/oder ein mehrschichtig und aus unterschiedlichen Materialien aufgebauter Boden sowie gegebenenfalls eine abschließende transparente Platte eingesetzt werden kann, wodurch sich ein Hohlraum bildet der mit Hilfe des Bauteiles 145 gefüllt werden kann, wie nachstehend anhand der Fig. 17 weiter erläutert wird. Alternativ können an der Hülle ausgebildete Komponente wie z.B. Ein/Auslassstutzen od.dgl. auch einstückig mit der Hülle ausgebildet sein. Zusätzlich kann die Hüllengeometrie - bezugnehmend auf Fig. 14d und die darin gezeigte Hülle 144 - zumindest mit einer vertieften und/oder erhabenen geometrischen Ausprägung 146 (z.B. einer Nut oder einer Rippe) im unteren Bereich der Hülle 144 versehen sein, mittels der ein zusätzlicher Boden 15, 25 (Fig. 2 bzw. 17) befestigt werden kann, der für aktinische Strahlung zur Aushärtung der fotosensitiven Substanz zumindest teilweise durchlässig - z.B. aus Plexiglas, Acrylglas, oder Floatglas gebildet - ist und einen zusätzlichen Hohlraum unter dem Boden der Hülle 141-144 bildet. Zudem kann diese Ausprägung eine Ausrichtungsmöglichkeit und/oder Befestigungsmöglichkeit der Hülle 144 bieten.

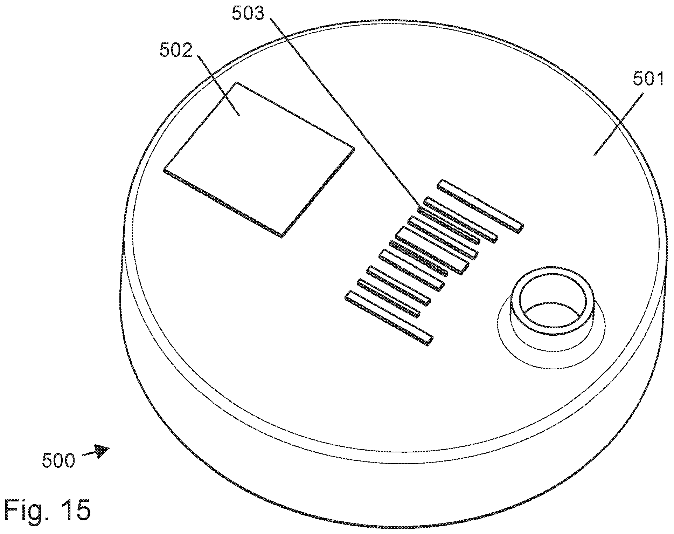

Fig. 15 zeigt ein Beispiel eines Kartuschenverschlussteils 500, auf dessen Außenseite (hier die Oberseite des Deckels 501) ein oder mehrere Informationsträger 502, 503 vorgesehen sind, worin Information betreffend die fotosensitiven Substanz, insbesondere hinsichtlich Menge, Art und/oder Zustand derselben, und/oder Prozessparameter eines Vorgangs der Herstellung eines dreidimensionalen Objektes gespeichert sind. Von dem Informationsträger können die Daten über geeignete Sendewege an die Stereolithographie-Vorrichtung, beispielsweise die Steuereinrichtung 9 übermittelt werden. Der Informationsträger kann z.B. ein Aufdruck, ein Barcode 503, ein RFID-Chip 502, ein Magnetstreifen od.dgl. sein.

Fig. 16a-16d stellen eine Abfolge von einzelnen Stadien oder Phasen dar, die der Illustration der Funktion der erfindungsgemäßen Kartuscheneinrichtung (am Beispiel eines Kartuschensystems 10 der Fig. 2) in einer möglichen Ausführungsform einer erfindungsgemäßen Stereolithographie-Anlage 1 dienen. In diesen Figuren ist zur besseren Übersichtlichkeit der Darstellung lediglich die Lichtquelle 8 der Anlage 1 und das Kartuschensystem 10 gezeigt, während die Einrichtungen zum Halten, Positionieren sowie allfälligen Verformens (Stauchen/Strecken) des Kartuschensystems 10 nicht gezeigt sind. Die Fig. 16a-16d illustrieren die Herstellung eines dreidimensionalen Objekts 2 anhand eines einzelnen Bauzyklus für eine Schicht Bn des Objekts 2, von dem bisher die Schichten B1 bis Bn-1 erzeugt worden sind. In den Zeichnungen dieser Offenbarung ist das dreidimensionale Objekt 2 als ein Bauteil mit umgekehrt-pyramidenartiger Form gezeigt, was lediglich beispielhaft gedacht ist und nicht einschränkend sein soll; selbstverständlich können die unterschiedlichsten Formen dreidimensionaler Objekte erzeugt werden. Der Bauzyklus für die Schicht Bn unter Verwendung einer fotosensitiven Substanz 3 umfasst folgende Phasen:
Phase 1: Ausgangsstellung mit der Höhe A1 (Fig. 16a),
Phase 2: Absenken des Trägers auf die Höhe A2 (Fig. 16b), mit A2<A1,
Phase 3: Belichten bzw. Erzeugung der Schicht Bn (Fig. 16c),
Phase 4: Abheben des Trägers (Fig. 16d) und gegebenenfalls Entformen der ausgehärteten Schicht Bn.

Dadurch ist eine Endstellung erreicht, die der Ausgangsstellung (Phase 1) entspricht, jedoch mit einer Höhe A3 > A2. Die Höhe A3 kann mit der Höhe A1 vor dem gezeigten Bauzyklus übereinstimmen oder verscheiden sein. Häufig ist A3>A1, weil die Größe des Bauteils zunimmt.

Fig. 16a stellt die Ausgangssituation dar, mit einer bereits perforierten Kapsel 111, aus der die fotosensitive Substanz 3 in den Innenraum 140 des Kartuschenssystems 10 fließt und dort den Boden der Hülle 14 füllt bzw. bedeckt, der den Aufnahmeraum der Erfindung darstellt. In der Ausgangsstellung (Phase 1) mit der Höhe A1 sind bereits n-1 Bauteilschichten des Bauteiles 2 erzeugt, und die zuletzt gebildete Schicht Bn-1 befindet sich in einer Stellung über dem Boden der Hülle 14.

Sodann wird, wie in Fig. 16b gezeigt, der durch das Verschlussteil 11 gebildete Oberteil des Kartuschensystems 10 unter Stauchung desselben abgesenkt. Das Absenken des Verschlussteiles 11 erfolgt günstiger Weise, bis die Schicht Bn-1 mit der fotosensitiven Substanz 3 (erneut) in Kontakt tritt. Die Schicht Bn-1 wird günstiger Weise so positioniert, dass sie sich um die gewünschte Schichtdicke der zu bildenden Schicht Bn über der Referenzfläche 41 befindet. Während des Absenkes des Verschussteiles 11 kann gegebenenfalls weiterhin fotosensitive Flüssigkeit 3 aus der Kapsel 111 austreten, dabei wird die sich noch unter der Schicht Bn-1 befindliche flüssige fotosensitive Substanz 3 auf die gewünschte Schichtdicke der Schicht Bn verdrängt; mit anderen Worten, die fotosensitive Substanz 3 füllt den Spalt zwischen der Schicht Bn-1 und der Referenzebene 41, die von dem Boden der Hülle 14 bzw. ggf. einer durch eine nichtreaktive Phase 33 (siehe Fig. 17) der fotosensitiven Substanz 3 gebildet wird. Die verformbare Hülle 14 nimmt erfindungsgemäß und entsprechend ihrer Gestaltung einen gestauchten, nämlich zusammengefalteten und/oder ausgebeulten, Zustand ein.

In Phase 3, illustriert in Fig. 16c, wird die neue Bauteilschicht Bn mithilfe von aktinischer Strahlung 80, beispielsweise UV-Licht, das von der Lichtquelle 8 ausgesendet und auf den zu entwickelnden Bereichen der Schicht Bn auf der Referenzfläche 41 fokussiert wird, ausgehärtet. Hierbei wird in Übereinstimmung mit herkömmlichen Stereolithographieverfahren die Struktur der Schicht Bn durch Auswahl der belichteten Bereiche der Schicht Bn erzeugt.

In Phase 4 wird die so in Phase 3 ausgehärtete Schicht Bn von dem Boden der Hülle 14 oder der Phase 33 durch eine Relativbewegung des Verschlussteils 11 abgehoben; somit wird die neu gebildete Schicht Bn von der Referenzfläche 41 getrennt. Dabei wird die Hülle 14 entsprechend der Größe des Hubs der Bewegung nach oben elastisch verformt, und zwar in der Regel teilweise entspannt.

Fig. 17 zeigt eine andere Ausführungsform eines Kartuschensystems 20, worin die Hülle 24 beispielsweise im Wesentlichen der Hülle 143 der Fig. 14c nachgebildet ist, in einer Längsschnittansicht. Unter der Hülle 24 befindet sich ein Hohlraum 22, der zwischen einem äußeren Glasboden 25 und der Unterseite 23 der Hülle 24 ausgebildet ist. Durch die seitlichen Fortsätze der Hülle 24 oder andere dafür vorgesehene Öffnungen (nicht gezeigt) kann der Hohlraum 25 mit einem Fluid 19 (z.B. Sauerstoff oder einem anderen die Reaktion unterbindenden Gas) oder anderen Inhibitoren geflutet werden (Volumensdurchsatz V). Es bildet sich durch den durch den permeablen Boden der Hülle 24 in den Innenraum 240 der Kartusche vordringenden Inhibitor eine nichtreaktive Phase 33 der fotosensitiven Substanz 3 aus, deren Oberfläche die Referenzfläche 42 dieser Ausführungsform bildet, anstelle der (inneren) Bodenfläche der Hülle 24. Eine derartig gebildete Referenzfläche 42 bietet den Vorteil, dass die erzeugte Schicht des Bauteils 2 nicht an der Bodenfläche der Hülle 24 haftet und daher das Risiko eines Anklebens und eventuellen Abreißens der unteren Schicht vermieden wird.

Der Innenraum des Kartuschensystems kann in dieser oder auch in anderen gezeigten Ausführungsformen zusätzlich mit einem Druck p1 beaufschlagt werden, der größer oder kleiner als der Umgebungsdruck p0 ist; dies kann durch dafür vorgesehene Öffnungen (nicht gezeigt) im Verschlussteil 21 und/oder der Hülle 24 erfolgen. Dabei kann der Innenraum des Kartuschensystems beispielweise mit einem speziellen Schutzgas (z.B. Stickstoff) geflutet werden, welches die Sauerstoffinhibierung bereits gebildeter Schichten verhindert und somit die mechanische Fetsigkeit der Schichten sowie deren Oberflächengüte positiv beeinflusst.

Fig. 18 illustriert eine weitere mögliche Ausführungsform der Hülle 34 (die der Hüllenvariante 144 der Fig. 14d entsprechend ausgebildet ist) und eines Aufbaus des Kartuschensystems 30. In dieser Ausführungsvarianate hat die Hülle 34 einen durchbrochenen (d.h. nicht vollständig ausgebildeten) Boden 344, der somit eine Öffnung 18 (oder mehrere solche Öffnungen) aufweist. Diese Öffnung wird mit Hilfe eines eingesetzten platten- oder blattförmigen Bauteils oder Bauteilverbundes 35 verschlossen. Dieser Bauteil 35 kann gegebenenfalls mehrteilig aufgebaut sein; er sorgt für einen geschlossenen Innenraum 340 des Kartuschensystems 30, und seine obere Fläche bildet die Referenzfläche. Das Bauteil 35 kann beispielsweise durch einen Sandwichaufbau gebildet werden, der zumindest teilweise durchlässig für die zur Aushärtung der fotosensitiven Substanz 3 verwendete aktinische Strahlung sowie Gase sein kann; z.B. kann eine elastische Folie 31 (z.B. FEP-Folie, Teflonfolie) auf einem Trägerteil 32 ausgebildet sein, welcher aus einem Material wie z.B. mikroporösem Glas besteht, das eine besonders gute Permeabilität für das eingesetzte Gas bzw. Gasgemisch zur Bildung einer nichtreaktiven Phase 33 (vgl. oben zu Fig. 17) aufweist.

Zudem zeigt Fig. 18 einen weiteren Aspekt der Verwirklichung der Hülle, aufbauend auf der Variante der Hülle 144 der Fig. 14d, wobei der Mantel der Hülle 34 aus mehreren Segmenten (341, 342, 343) gebildet wird und die einzelnen Segmente voneinander unterschiedliche Materialeigenschaften aufweisen können. Dies erlaubt die Bildung einer Kartuschenhülle welche beispielsweise Bereiche mit unterschiedlicher Flexiblität und/oder unterschiedlichen optischen Eigenschaften aufweist. Selbstverständlich kann eine Segmentierung des Mantels auch bei jeglicher anderer der hierin gezeigten Ausführungsformen vorgesehen sein.

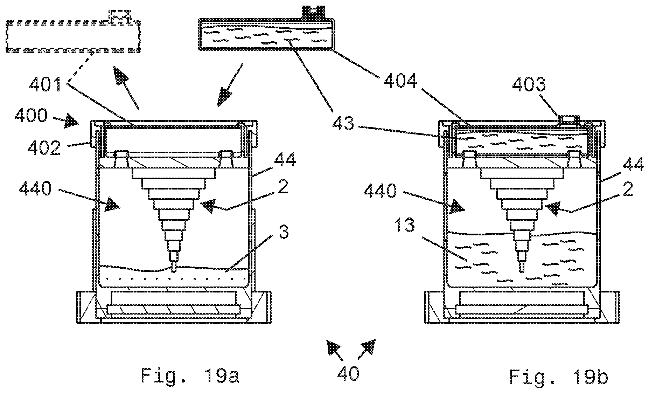

Ein weiterer Aspekt der Erfindung ist in Fig. 19a und 19b illustriert, anhand von Schnittdarstellungen eines erfindungsgemäßen Kartuschensystems 40, nämlich das Auswechseln einer Kapsel, um zwischen verschiedenen Proszessierungsarten zu wechseln, z.B. von einem Schichtaufbau zu einem Reinigungsvorgang. Fig. 19a zeigt das Kartuschensystem 40, in dem ein Objekt oder Bauteil 2 mithilfe der fotosensitiven Substanz 3 aufgebaut wurde, gemäß weiter oben beschriebenen Vorgängen; die fotosensitive Substanz 3 stammt aus einer Kapsel 401, die in den Träger 402 des Kartuschensystems 40 eingesetzt ist. Durch Entfernen der Kapsel 401 und Ersetzen derselben durch Einsetzen einer neuen Kapsel 404, die mit dem Verschlussteil 400 dieses Ausführungsbeispiel kompatibel ist, kann anstelle der fotosensitiven Substanz 3 eine andere Substanz zugeführt werden. Beispielsweise kann die Kapsel 404 mit einem Lösungsmittel 43, wie z.B. Isopropanol, gefüllt sein. Durch Einsetzen der Kapsel 404 und Perforieren der Außenhülle der Kapsel 404 im Zuge des Einlegens in den Innenraum des Trägers 402 des Verschlussteils 400 wird das Lösungsmittel 43 freigesetzt und kann durch die Öffnungen des Verschlussteils 400 in den Innenraum 440 des Kartuschensystems 40 gelangen. Wie in Fig. 19b dargestellt, füllt das Lösungsmittel 43 teilweise oder zur Gänze den Innenraum des Kartuschensystems 40 und ermöglicht so die Reinigung des Bauteiles 2, insbesondere die Entfernung von noch am Bauteil 2 haftender fotosensitiver Substanz 3 und/oder das Lösen von restlicher, sich im Innenraum befindlicher fotosensitiven Substanz 3, die noch nicht oder nur teilweise ausgehärtet ist. Durch das Lösen der fotosensitiven Substanz 3 im Lösungsmittel 43 wird eine Lösung oder Mischung 13 im Innenraum der Kartusche gebildet. Diese kann nun durch Kippen oder Umdrehen der Kartusche 40 über Öffnungen im Verschlussteil 400 abgeleitet werden. Beispielsweise kann durch die Öffnungen im Träger 402 bei Entfernen des Kapselverschlussteiles 403 die Mischung 13 aus dem Innenraum 440 des Kartuschensystems 40 ausfließen. Falls gewünscht, kann sodann die Flüssigkeit durch neues Lösungsmittel ersetzt werden. Hierbei kann die Kartuscheneinrichtung so ausgeführt sein, dass ein Lösen der fotosensitiven Substanz 3 durch Vibration, Zentrifugieren, Schütteln, Erhöhen der Temperatur oder anderen geeignete Maßnahmen gefördert werden kann.

Auf ähnliche Weise wie in Fig. 19a und 19b gezeigt kann auch ein Wechsel zwischen verschiedenen Arten von fotosensitiven Substanzen vorgenommen werden, z.B. wenn das Objekt 2 aus verschiedenen Materialien zusammengesetzt werden soll, und/oder verschiedene Flüssigkeiten zum Reinigen und/oder Nachhärten des Objekts 2 erwünscht sind.

Ein Auswechseln oder auch ein kontinuierlicher Austausch der Flüssigkeiten kann auch dadurch erreicht werden, dass über eine erste Öffnung im Träger 402 oder der Hülle 44 eine neue (in der Regel flüssige oder suspensionsartige) Substanz zugeführt wird, die die Substanz im Innenraum verdrängt; über eine zweite Öffnung kann die so verdrängte Substanz abfließen. Geeignete Pumpen können in der Zufuhrleitung der ersten Öffnung und/oder der Abflussleitung der zweiten Öffnung vorgesehen sein.

Die obigen Ausführungsformen der erfindungsgemäßen Kartuscheneinrichtung bzw. Stereolithographievorrichtung können zudem je nach Anwendung folgende Aspekte und Weiterbildungen beinhalten:
Die Kartuscheneinrichtung kann die fotosensitiven Substanz direkt oder indirekt beinhalten, und ist einstückig oder aus mehreren Komponenten zusammengesetzt. Die Hülle kann dreidimensional geformt und vorzugsweise einstückig sein, wobei der verformbare Teil der Hülle - der vorzugsweise ein seitlich umlaufender Mantel ist - aus einem biegsamen oder verfaltbaren Material bestehen kann. Der Boden der Hülle kann zumindest teilweise licht- und gasdurchlässig sein, und er kann aus einem hierzu geeigneten Material gefertigt sein, beispielsweise Silikon oder einem mehrlagigen Werkstoffverbund, der Silikon-, Glas- und/oder Kunststoffschichten enthält, beispielsweise in einem Sandwich-artigem Aufbau. Seitens der Stereolithographievorrichtung ist eine Lichtquelle vorgesehen, die vorzugsweise steuerbar beweglich und verfahrbar ist, zur selektiven Belichtung der fotosensitiven Substanz, sowie mindestens einen Objektträger (auch als Trägeraufnahme oder kurz Träger bezeichnet). Der Objektträger ist innerhalb oder außerhalb der Kartuscheneinrichtung angeordnet und kann gegebenenfalls relativ zum Boden der Kartusche beweglich sein.

In einer anderen Variante kann der Mantelteil der Kartusche aus einem Folienschlauch (z.B. FEP- oder PTFE-Folie) bestehen, während der Boden der Kartusche und der verschließende Oberteil der Kartusche einfache Spritzgussteile aus geeignetem Kunststoff und/oder geeigneten mehrschichtigen Verbundmaterialien sind. Die Kosten dieser Ausführungsvariante sind deutlich geringer als jene der Silikon-Spritzguss-Ausführung, und die Folie wäre zudem dünner und leichter zu verformen.

Das fotosensitive Material kann sich in der Kartusche in einem (oder mehreren) darin ausgebildeten Aufnahmeraum befinden, in den es beispielsweise noch vor dem Einlegen der Kartusche in die Anlage eingefüllt worden ist, oder es kann in einem oder mehreren Behältern, die in die Kartusche eingelegt werden, zugeführt werden, beispielsweise in einem dafür vorgesehenen Aufnahmeraum innerhalb des Kartuschen-Körpers, des Trägers (Objektträgers) bzw. der Hülle selbst. Der Träger, der zudem gleichzeitig als Verschlussteil dienen kann, und einstückig oder aus mehreren Teilen gebildet sein kann, kann über mindestens eine geometrische Aussparung verfügen, in die die fotosensitive Substanz oder ein Behälter dafür aufgenommen werden kann. Diese Aussparung kann zudem eine speziell geformte Oberfläche oder Strukturen aufweisen oder in ihr kann eine Komponente mit speziell geformter Oberfläche oder Strukturen eingefügt werden, wobei diese Oberfläche bzw. Strukturen eine perforierende Wirkung auf einen anderen Körper hervorrufen kann. Somit kann der Träger bzw. die Aussparung mindestens eine fotosensitive Substanz aufnehmen und/oder aufbewahren, entweder direkt oder indirekt in einem Behälter enthalten.

Dies erübrigt komplizierte Nachfüll- und Dosiereinrichtungen sowie eine komplizierte Reinigung des Trägers. Ein ganz besonderer Vorteil ergibt sich mit dem erfindungsgemäßen Kartuschen-System (Kartuscheneinrichtung) durch das einfache und kontaminationsfreies Einsetzen und Entnehmen in die bzw. aus der Stereolithografie-Anlage. Dabei kann schnell und ohne lange Reinigungs- und Rüstzeiten, zwischen verschiedenen Kartuschen, welche z.B. unterschiedliche fotosensitive Substanzen enthalten, gewechselt werden. Daher ist es z.B. auch möglich, in einer Anlage während eines bereits gestarteten Aufbauprozesses eine zweite Kartusche zuzuschalten, um so die Auslastung der Anlage zu erhöhen. Weiteres kann aufgrund der bekannten Substanzmenge innerhalb der Kartusche, je nach Anforderung nur eine genau festgelegte Zahl bzw. eine genau festgelegte Objektvolumen erzeugt werden. Die Haltbarkeit der fotosensitiven Substanz kann somit mit Hilfe des erfindungsgemäßen Kartuschen-Systems genau festgelegt werden, und daher lassen sich auch die zu erwartenden Objekt- und Materialeigenschaften im ausgehärteten Zustand determinieren, wie zum Beispiel eine gewünschte Biokompatibilität. Das erfindungsgemäße Kartuschen-System lässt sich einfach aus der Anlage, einschließlich des gebildeten Objekts auf dem Träger entnehmen, und kann danach in eine Nachbearbeitungsanlage (z.B. zur Reinigung und/oder Nachbelichtung) eingebracht werden, die dazu ausgelegt ist das Kartuschen-System aufzunehmen und eventuell durch Öffnungen oder durch Perforieren der Kartusche selbst an geeigneten Stellen Reinigungsmittel, beispielweise ein Lösungsmittel wie Isopropanol, einzubringen und/oder abzuführen.

Außerdem kann über dieselbe und/oder andere dafür vorgesehene bzw. geeignete Öffnungen in Teilen der Kartusche eine spezielle Atmosphäre eingeleitet werden. Somit kann die nun gereinigte oder teilweise gereinigte Kartusche mit dem darin befindlichen gereinigten Objekt auf dem Träger als eine Glocke dienen, welche mit Schutzgas gefüllt ist. Bevorzugt ist die Hülle mindestens teilweise lichtdurchlässig, besonders bevorzugt ist die Hülle sowie der Boden der Kartusche lichtdurchlässig und aus dem gleichen flexiblen Material, zum Beispiel Silikon, gefertigt. Viele vorteilhafte Ausführungsformen zeichnen sich dadurch aus, dass die Hülle sowie der Boden der Kartusche einstückig aus einem lichtdurchlässigen, flexiblen und chemisch stabilen, sowie sauerstoffdurchlässigen Material besteht, wie z.B. Silikon, besonders bevorzugt aus einem Liquid Silikon Rubber (LSR) Material, wobei der Verschlussteil sowie etwaige andere Teile oder Teile davon, wie beispielsweise der Träger und/oder der oder die Kolben und/oder der oder die mit fotosensitiven Material gefüllten Kapsel(n), aus einem nicht lichtdurchlässigen Material bestehen können. Der Träger kann über mindestens eine geometrische Aussparung verfügen, über die die fotosensitive Substanz durch den Kolben oder an diesem vorbei in den zur Belichtung vorgesehenen Bereich der Kartusche bzw. zum Kartuschen-Boden vordringen kann, aufgrund der Schwerkraft oder mit Hilfe von Druck, der durch den Träger ausgeübt wird.

Da die Erfindung eine separate Lagerungsmöglichkeit der fotosensitiven Substanz im Verschlussteil bzw. in einem im Verschlussteil konstruktiv gebildeten Hohlraum ermöglicht, kann ein Quellen bzw. Eindiffundieren der Substanz in sensiblere Bereiche der Kartusche konstruktiv ausgeschlossen werden. Vorteilhaft ist es hierbei, wenn die fotosensitive Substanz zusätzlich in einem - z.B. beutelartigen - Behälter oder spezifisch gebildeten Behälterkörper eingeschlossen ist, der sich vorzugsweise im Träger befindet oder in diesen eingelegt werden kann. Der Verschlussteil, genauer gesagt Teile desselben wie beispielsweise die Rückseite des Trägers, ist konstruktiv und/oder aufgrund der Oberflächenbeschaffenheit dazu eingerichtet, einen Behälter (z.B. Beutel) der fotosensitiven Substanz zu perforieren, um dadurch die fotosensitive Substanz freizugeben. In einer anderen vorteilhaften Ausführungsform kann eine mit einer fotosensitiven Substanz gefüllte Einweg-Kapsel durch einen speziell geformten Teil des Trägers angestochen werden, wodurch die fotosensitive Substanz freigegeben wird.

Das Kartuschen-System kann einmalig verwendbar sein oder so ausgelegt sein, dass es mehrmals verwendet werden kann. Es kann somit als Einweg-System ausgelegt sein oder wiederbefüllbar gestaltet sein.

Die erfindungsgemäße Kartuscheneinrichtung ermöglicht je nach Auslegung eine einfachere, genauere Messung der Gasmischung, geringere Gasmengen, eine genauere Auslegung des Volumensstromes an Gas, da die Menge der fotosensitiven Substanz beispielweise durch die Füllung der Kapsel genau bekannt ist, einen sicheren und einfacheren Umgang mit der fotosensitiven Substanz, einen sichern und stabileren Prozess sowie eine Verhinderung einer Kontamination. Weiters erübrigt die vorliegende Erfindung eine ganz oder teilweise gasdichte Ausführung der Anlage, da das Gas auf die Kartusche eingeschränkt werden kann.

In einer weiteren günstigen Ausgestaltung weist die Hülle der Kartusche einen doppelten Boden auf, der einteilig oder mehrteilig ausgebildet sein kann. Dabei kann der die Hülle (z.B. nach unten hin) abschließende Teil, der die Referenzebene - und im einfachsten Falle auch den Boden des Kartuschensystems - bildet, aus einem nicht flexiblen oder nur teilweise flexiblen, mehrlagigen gebildeten Boden bestehen, der durchlässig für aktinische Strahlung sowie permeabel für spezielle Gase bzw. Gasgemische ausgestaltet ist. Unterhalb der Kartuschen-Hülle kann sich ein Stützelement befinden, das ebenfalls permeabel für Gase ist.

Die Anbindung zwischen der erwähnten Bodenfläche und der Hülle kann derart ausgeführt sein, dass sie gasdicht ist. Dabei kann die Hülle selbst über Dichtelemente wie spezielle Wülste verfügen. Die Hülle der Kartusche kann in einer anderen vorteilhaften Ausführungsvariante so gestaltet sein, dass erst durch Einsetzen in die erfindungsgemäße Anlage ein doppelter Boden gegenüber der Hülle gebildet wird, wobei der Übergang ganz oder teilweise dicht gegen Gase ausgeführt ist. Die Kartuscheneinrichtung kann weiters auch selbst in einer gasdichten Ummantelung in der Anlage, wie z.B. einem Rohr, aufbewahrt werden. Dadurch entsteht ein geometrisch beliebig ausgeprägter Hohlraum, welcher je nach den Erfordernissen und Möglichkeiten der Anwendung zumindest eine Zugangsöffnung und/oder zumindest eine Auslassöffnung aufweisen kann, über den eine spezielles Gas oder ein Gasgemisch eingeleitet werden kann oder bereits eingeleitet wurde. Dabei ist der erste Boden der Hülle des Kartuschen-Systems, der aus mindestens einem Material besteht, das teilweise oder ganz für das Gas oder das Gasgemisch permeabel ist, und vorzugsweise aus Silikon oder einer Materialkombination mit Silikon und/oder einem permeablen Material, wie z.B. PTFE oder Glas, ausgeführt. Der abschließende Teil der Hülle kann wie bereits beschrieben ebenfalls aus einem für Gas durchlässigen mikroporösen Glas bestehen. Somit kann von unten direkt oder indirekt Gas oder ein Gasgemisch in das innere Volumen der Kartusche zu- und/oder abgeführt werden. In einer weiteren Ausgestaltung weist das Kartuschen-System einen Sensor oder Messfühler auf, welcher die Diffusion des Gases oder des Gasgemisches zeitlich aufgelöst messen kann, um dadurch den Volumenstrom des Gases oder von Anteilen eines Gasgemisches über die Prozessdauer zu steuern. Dabei kann der Sensor bereits in der Kartusche vorhanden sein, z.B. im Träger. Beispielsweise kann der Sensor beim Einlegen des Kartuschen-Systems eingeführt werden, und gegebenenfalls durch eine Arretierung bzw. Zentrierungsprozedur der Kartusche durch eine spezielle zuvor versiegelte Öffnung oder durch Perforieren der Kartusche positioniert werden. Dabei ist es günstig, wenn die Position des Sensors so gewählt ist, dass dieser nicht mit dem fotosensitiven Harz in Berührung kommt, oder der Sensor so ausgelegt ist, dass eine Kontaminierung keine Verfälschung der Messung sowie eine erhöhte Messunsicherheit auslöst. Die Messmethode der Atmosphäre innerhalb der Kartusche kann dabei durch direkte oder indirekte Methoden erfolgen. Besonders vorteilhaft kann eine Messmethode sein, bei der der Sensor oder Messfühler außerhalb der Kartusche bzw. der Hülle angeordnet ist und eine Messung der Zusammensetzung bzw. der Gaskonzentration innerhalb der Kartusche ermöglicht; es kann dafür auch die Permeabilität der Hülle selbst ausgenutzt werden, um Rückschlüsse auf die Gaskonzentration in speziellen Bereichen zu ermöglichen.

In weiteren Ausgestaltungen der Erfindung können innerhalb der Kartusche unterschiedliche Gase oder Gasgemische zugeführt werden. Beispielweise kann von unten durch den Boden der Kartusche Sauerstoff in einer höheren Konzentration als in der normalen Atmosphäre und von oben durch den Träger Stickstoff zugeführt werden, um so gezielt die Eigenschaften des fotosensitiven Harzes bzw. dessen Prozessierung und letzten Endes die Endeigenschaften des gebildeten Körpers zu beeinflussen.

Selbstverständlich kann der Fachmann ohne Weiteres an den hier offenbarten Ausführungsformen der Erfindung vielfältige Abwandlungen und Ergänzungen vornehmen, sofern diese im Schutzbereich der nachstehenden Ansprüche liegen.

## Patentansprüche

1. Kartuscheneinrichtung (5, 6, 10, 20, 30, 40) zur Verwendung in einer Stereolithographie-Vorrichtung (1), welche Kartuscheneinrichtung einen von einer Hülle (14, 141, 142, 143, 144, 24, 34, 44) umschlossenen Innenraum (140, 240,340,440) aufweist, wobei die Hülle der Kartuscheneinrichtung verformbar ist, wobei der Innenraum (140,240,340,440) ein während einer Verformung der Hülle im Wesentlichen gleich bleibendes Volumen aufweist, das zumindest zum Teil von einem Aufnahmeraum (4) gebildet wird, in dem eine Menge einer fotosensitiven Substanz (3) für zumindest eine Zeitdauer eines Bestrahlungs- und Aushärtungsvorgangs aufnehmbar ist und für eine Strahlung (80), die ein Aushärten der fotosensitiven Substanz auslöst, zugänglich ist, wobei die Hülle einen Boden, einen Oberteil und einen den Boden und den Oberteil verbindenden Mantel aufweist, wobei der Boden der Hülle und/ oder der Mantel zumindest einen perforierbaren, geschwächten Bereich aufweisen, zum Ausbilden zumindest einer Öffnung für ein Zu- oder Abführen einer fotosensitiven Substanz und oder das Zu- oder Abführen von Lösungsmittel zu bzw. aus dem Innenraum.

2. Vorrichtung nach Anspruch 1, wobei der Mantel und/oder der Boden für Gase oder Gasgemische (19), Sauerstoff oder Luft, durchlässig ausgebildet ist.

3. Vorrichtung nach einem der vorhergehenden Ansprüche, wobei der verformbare Bereich der Hülle einstückig aus einem biegsamen Material gebildet ist.

4. Vorrichtung nach einem der vorhergehenden Ansprüche, wobei das Volumen des Innenraums (140) zum überwiegenden Teil, oder zur Gänze, von dem Aufnahmeraum (4) gebildet ist.

5. Kartuscheneinrichtung (5, 6, 10, 20, 30, 40) zur Verwendung in einer Stereolithographie-Vorrichtung (1), welche Kartuscheneinrichtung einen von einer Hülle (14, 141, 142, 143, 144, 24, 34, 44) umschlossenen Innenraum (140, 240,340,440) aufweist, wobei die Hülle der Kartuscheneinrichtung verformbar ist, wobei der Innenraum (140,240,340,440) ein während einer Verformung der Hülle im Wesentlichen gleich bleibendes Volumen aufweist, das zumindest zum Teil von einem Aufnahmeraum (4) gebildet wird, in dem eine Menge einer fotosensitiven Substanz (3) für zumindest eine Zeitdauer eines Bestrahlungs- und Aushärtungsvorgangs aufnehmbar ist und für eine Strahlung (80), die ein Aushärten der fotosensitiven Substanz auslöst, zugänglich ist, wobei die Hülle seitlich eine verschließbare Öffnung aufweist, durch die fotosensitive Substanz in den Innenraum zuführbar und aus diesem ableitbar ist.

6. Vorrichtung nach Anspruch 5, wobei die Hülle Dichtungselemente zum Abdichten der Öffnung aufweist.

7. Vorrichtung nach Anspruch 5 oder 6, wobei die Öffnung durch ein Verschlusselement (11, 21,100,200,300,400,500) verschließbar ist, welches einstückig ausgeführt ist, wobei das Verschlusselement als Träger der ausgehärteten Schichten der fotosensitiven Substanz ausgebildet ist.

8. Kartuscheneinrichtung (5, 6, 10, 20, 30, 40) zur Verwendung in einer Stereolithographie-Vorrichtung (1), welche Kartuscheneinrichtung einen von einer Hülle (14, 141, 142, 143, 144, 24, 34, 44) umschlossenen Innenraum (140, 240,340,440) aufweist, wobei die Hülle der Kartuscheneinrichtung verformbar ist, wobei der Innenraum (140,240,340,440) ein während einer Verformung der Hülle im Wesentlichen gleichbleibendes Volumen aufweist, das zumindest zum Teil von einem Aufnahmeraum (4) gebildet wird, in dem eine Menge einer fotosensitiven Substanz (3) für zumindest eine Zeitdauer eines Bestrahlungs- und Aushärtungsvorgangs aufnehmbar ist und für eine Strahlung (80), die ein Aushärten der fotosensitiven Substanz auslöst, zugänglich ist, wobei die Kartuscheneinrichtung eine in dem Innenraum bewegliche Komponente aufweist, welche über Führungen geometrischer, mechanischer und/ oder magnetischer Art in der Kartuscheneinrichtung geführt ist.

9. Kartuscheneinrichtung (5, 6, 10, 20, 30, 40) zur Verwendung in einer Stereolithographie-Vorrichtung (1), welche Kartuscheneinrichtung einen von einer Hülle (14, 141, 142, 143, 144, 24, 34, 44) umschlossenen Innenraum (140, 240,340,440) aufweist, wobei die Hülle der Kartuscheneinrichtung verformbar ist, wobei der Innenraum (140,240,340,440) ein während einer Verformung der Hülle im Wesentlichen gleich bleibendes Volumen aufweist, das zumindest zum Teil von einem Aufnahmeraum (4) gebildet wird, in dem eine Menge einer fotosensitiven Substanz (3) für zumindest eine Zeitdauer eines Bestrahlungs- und Aushärtungsvorgangs aufnehmbar ist und für eine Strahlung (80), die ein Aushärten der fotosensitiven Substanz auslöst, zugänglich ist, wobei die Kartuscheneinrichtung ein den Innenraum nach oben begrenzenden und abschließenden Verschlussteil (100,200,300,400,500, 11, 21) aufweist, wobei der auswechselbare und vorzugsweise steif ausgebildete Verschlussteil geometrische Aussparungen aufweist, die in einer dem Innenraum zugewandten Fläche ausgebildet sind.

10. Kartuscheneinrichtung (5, 6, 10, 20, 30, 40) zur Verwendung in einer Stereolithographie-Vorrichtung (1), welche Kartuscheneinrichtung einen von einer Hülle (14, 141, 142, 143, 144, 24, 34, 44) umschlossenen Innenraum (140, 240,340,440) aufweist, wobei die Hülle der Kartuscheneinrichtung verformbar ist, wobei der Innenraum (140,240,340,440) ein während einer Verformung der Hülle im Wesentlichen gleich bleibendes Volumen aufweist, das zumindest zum Teil von einem Aufnahmeraum (4) gebildet wird, in dem eine Menge einer fotosensitiven Substanz (3) für zumindest eine Zeitdauer eines Bestrahlungs- und Aushärtungsvorgangs aufnehmbar ist und für eine Strahlung (80), die ein Aushärten der fotosensitiven Substanz auslöst, zugänglich ist, wobei die Kartuscheneinrichtung ein den Innenraum nach oben begrenzenden und abschließenden Verschlussteil (100,200,300,400,500, 11, 21) aufweist, wobei der Verschlussteil auswechselbar ist, wobei der auswechselbare Verschlussteil mehrteilig ausgeführt ist und mindestens einen Bereich (101) aufweist, in dem eine oder mehrere fotosensitive Substanzen aufbewahrbar sind.

11. Vorrichtung nach Anspruch 10, wobei der Bereich zur Aufnahme eines Behälters (101, 312, 401, 404) einer fotosensitiven Substanz eingerichtet ist, wobei Mittel (105, 305) zum Perforieren des Behälters vorgesehen sind.

12. Kartuscheneinrichtung (5, 6, 10, 20, 30, 40) zur Verwendung in einer Stereolithographie-Vorrichtung (1), welche Kartuscheneinrichtung einen von einer Hülle (14, 141, 142, 143, 144, 24, 34, 44) umschlossenen Innenraum (140, 240,340,440) aufweist, wobei die Hülle der Kartuscheneinrichtung verformbar ist, wobei der Innenraum (140,240,340,440) ein während einer Verformung der Hülle im Wesentlichen gleich bleibendes Volumen aufweist, das zumindest zum Teil von einem Aufnahmeraum (4) gebildet wird, in dem eine Menge einer fotosensitiven Substanz (3) für zumindest eine Zeitdauer eines Bestrahlungs- und Aushärtungsvorgangs aufnehmbar ist und für eine Strahlung (80), die ein Aushärten der fotosensitiven Substanz auslöst, zugänglich ist, wobei die Kartuscheneinrichtung ein den Innenraum nach oben begrenzenden und abschließenden Verschlussteil (100, 200, 300, 400, 500, 11, 21) aufweist, wobei der Verschlussteil auswechselbar ist, wobei der Verschlussteil mindestens einen integrierten Kolben (301) aufweist, durch dessen Hubbewegung das Austreten der fotosensitiven Substanz dosierbar ist.

13. Vorrichtung nach Anspruch 12, wobei der Kolben (301) Einrichtungen (305) zum Perforieren oder Öffnen eines in dem Verschlussteil befindlichen, fotosensitiver Substanz Behälters (312) aufweist.

14. Vorrichtung nach einem der vorhergehenden Ansprüche, mit einem Informationsträger (502, 503), der Information betreffend die fotosensitiven Substanz, hinsichtlich Menge, Art und/ oder Zustand derselben, und/ oder Prozessparameter eines Vorgangs der Herstellung eines dreidimensionalen Objektes hält.

15. Stereolithographie-Vorrichtung (1) zum Herstellen eines dreidimensionalen Objektes (2) durch schichtweises oder kontinuierliches Aushärten einer fotosensitiven Substanz (3) durch Einwirkung einer spezifischen, die Aushärtung auslösenden Strahlung, wobei die Vorrichtung umfasst:
eine Trägereinrichtung (7);
eine Strahlungsquelle (8) zum Erzeugen der die Aushärtung auslösenden Strahlung (80);
zumindest eine auf der Trägereinrichtung positionierbare und entnehmbare Kartuscheneinrichtung (5, 6) nach einem der vorhergehenden Ansprüche, wobei zumindest ein Teilbereich der Hülle für die die Aushärtung auslösende Strahlung durchlässig ist.

16. Vorrichtung nach einem der vorhergehenden Ansprüche, mit einer Einrichtung zur Erzeugung von Vibrationen, welche ein Ablösen des hergestellten dreidimensionalen Objekts erleichtern.

17. Vorrichtung nach einem der vorhergehenden Ansprüche, wobei die Kartuscheneinrichtung in die Stereolithographie-Vorrichtung (1) lösbar einsetzbar ist.

## Claims

1. A cartridge device (5, 6, 10, 20, 30, 40) for use in a stereolithography apparatus (1), which cartridge device has an interior (140, 240, 340, 440) enclosed by a sleeve (14, 141, 142, 143, 144, 24, 34, 44), the sleeve of the cartridge device being deformable, the interior (140, 240, 340, 440) having a volume which remains substantially constant during deformation of the sleeve and which is at least partially formed by a receiving space (4), in which a quantity of a photosensitive substance (3) is receivable for at least a period of time of a radiation and curing process and is accessible to radiation (80) which triggers curing of the photosensitive substance, the sleeve having a base, an upper part and a jacket connecting the base and upper part, and the base of the sleeve and/or the jacket having at least one perforatable, weakened area, for forming at least one opening for the supply or discharge of a photosensitive substance and/or the supply or discharge of solvent to or from the interior.

2. The apparatus according to claim 1, wherein the jacket and/or the base is designed to be permeable for gases or gas mixtures (19), oxygen or air.

3. The apparatus according to one of the preceding claims, wherein the deformable region of the sleeve is formed in one piece from a flexible material.

4. The apparatus according to one of the preceding claims, wherein the volume of the interior (140) for the most part, or in whole, is formed by the receiving space (4).

5. A cartridge device (5, 6, 10, 20, 30, 40) for use in a stereolithography apparatus (1), which cartridge device has an interior (140, 240, 340, 440) enclosed by a sleeve (14, 141, 142, 143, 144, 24, 34, 44), the sleeve of the cartridge device being deformable, the interior (140, 240, 340, 440) having a volume which remains substantially constant during deformation of the sleeve and which is at least partially formed by a receiving space (4), in which a quantity of a photosensitive substance (3) is receivable for at least a period of time of a radiation and curing process and is accessible to radiation (80) which triggers curing of the photosensitive substance, wherein the sleeve has a closable opening on its side, through which opening photosensitive substance can be supplied into the interior and drained therefrom.

6. The apparatus according to claim 5, wherein the sleeve has sealing elements for sealing the opening.

7. The apparatus according to claim 5 or 6, wherein the opening can be closed by a closure element (11, 21, 100, 200, 300, 400, 500) which is formed in one piece, the closure element being designed as a carrier of the hardened layers of the photosensitive substance.

8. A cartridge device (5, 6, 10, 20, 30, 40) for use in a stereolithography apparatus (1), which cartridge device has an interior (140, 240, 340, 440) enclosed by a sleeve (14, 141, 142, 143, 144, 24, 34, 44), the sleeve of the cartridge device being deformable, the interior (140, 240, 340, 440) having a volume which remains substantially constant during deformation of the sleeve and which is at least partially formed by a receiving space (4), in which a quantity of a photosensitive substance (3) is receivable for at least a period of time of a radiation and curing process and is accessible to radiation (80) which triggers curing of the photosensitive substance, wherein the cartridge device has a component that is movable in the interior and which is directed in the cartridge device by controls of the geometric, mechanical and/or magnetic type.

9. A cartridge device (5, 6, 10, 20, 30, 40) for use in a stereolithography apparatus (1), which cartridge device has an interior (140, 240, 340, 440) enclosed by a sleeve (14, 141, 142, 143, 144, 24, 34, 44), the sleeve of the cartridge device being deformable, the interior (140, 240, 340, 440) having a volume which remains substantially constant during deformation of the sleeve and which is at least partially formed by a receiving space (4), in which a quantity of a photosensitive substance (3) is receivable for at least a period of time of a radiation and curing process and is accessible to radiation (80) which triggers curing of the photosensitive substance, the cartridge device having a closure part (100, 200, 300, 400, 500, 11, 21) delimiting and closing the interior from above, the replaceable and preferably rigidly formed closure part having geometric recesses, which are formed in a surface facing the interior.

10. A cartridge device (5, 6, 10, 20, 30, 40) for use in a stereolithography apparatus (1), which cartridge device has an interior (140, 240, 340, 440) enclosed by a sleeve (14, 141, 142, 143, 144, 24, 34, 44), the sleeve of the cartridge device being deformable, the interior (140, 240, 340, 440) having a volume which remains substantially constant during deformation of the sleeve and which is at least partially formed by a receiving space (4), in which a quantity of a photosensitive substance (3) is receivable for at least a period of time of a radiation and curing process and is accessible to radiation (80) which triggers curing of the photosensitive substance, the cartridge device having a closure part (100, 200, 300, 400, 500, 11, 21) delimiting and closing the interior from above, the closure part being replaceable,
and the replaceable closure part being formed of multiple parts and having at least one area (101) in which one or more photosensitive substances can be stored.

11. The apparatus according to claim 10, wherein the area is configured for receiving a container (101, 312, 401, 404) of a photosensitive substance, and means (105, 305) are provided for perforating the container.

12. A cartridge device (5, 6, 10, 20, 30, 40) for use in a stereolithography apparatus (1), which cartridge device has an interior (140, 240, 340, 440) enclosed by a sleeve (14, 141, 142, 143, 144, 24, 34, 44), the sleeve of the cartridge device being deformable, the interior (140, 240, 340, 440) having a volume which remains substantially constant during deformation of the sleeve and which is at least partially formed by a receiving space (4), in which a quantity of a photosensitive substance (3) is receivable for at least a period of time of a radiation and curing process and is accessible to radiation (80) which triggers curing of the photosensitive substance, the cartridge device having a closure part (100, 200, 300, 400, 500, 11, 21) delimiting and closing the interior from above, the closure part being replaceable, and the closure part having at least one integrated piston (301), through the lifting movement of which the discharge of the photosensitive substance can be dosed.

13. The apparatus according to claim 12, wherein the piston (301) has means (305) for perforating or opening a photosensitive substance container (312) located in the closure part.

14. The apparatus according to one of the preceding claims, with an information carrier (502, 503) which holds information relating to the photosensitive substance, with regard to the amount, type and/or state of same, and/or process parameters of a process for producing a three-dimensional object.

15. A stereolithography apparatus (1) for producing a three-dimensional object (2) by layer-by-layer or continuous curing of a photosensitive substance (3) by exposure to a specific radiation which triggers the curing, the device comprising: a carrier device (7); a radiation source (8) for generating the radiation (80) that triggers the curing; at least one cartridge device (5, 6) according to one of the preceding claims that can be positioned on and removed from the carrier device, at least a partial area of the sleeve being permeable to the radiation that triggers the curing.

16. The apparatus according to one of the preceding claims, having a device for generating vibrations which facilitate detachment of the produced three-dimensional object.

17. The apparatus according to one of the preceding claims, wherein the cartridge device can be detachably inserted into the stereolithography apparatus (1).

## Revendications

1. Dispositif cartouche (5, 6, 10, 20, 30, 40) destiné à être utilisé dans un système stéréolithographique (1), lequel dispositif cartouche présente un espace intérieur (140, 240, 340, 440) entouré d'un manchon (14, 141, 142, 143, 144, 24, 34, 44), le manchon du dispositif cartouche étant déformable, l'espace intérieur (140, 240, 340, 440) présentant un volume qui reste sensiblement constant lors d'une déformation du manchon et qui est au moins partiellement formé à partir d'un espace de réception (4) dans lequel une quantité d'une substance photosensible (3) peut être reçue pendant au moins une période de temps d'un processus d'irradiation et de durcissement et être accessible à un rayonnement (80) qui déclenche le durcissement de la substance photosensible, le manchon présentant un fond, une partie supérieure et une chemise reliant le fond et la partie supérieure, le fond du manchon et/ou la chemise présentant au moins une zone perforée et affaiblie, pour former au moins une ouverture pour l'alimentation ou l'évacuation d'une substance photosensible et/ou pour l'alimentation ou l'évacuation d'un solvant vers ou depuis l'espace intérieur.

2. Système selon la revendication 1, la chemise et/ou le fond étant conçus pour être perméables aux gaz ou aux mélanges gazeux (19), à l'oxygène ou à l'air.

3. Système selon l'une quelconque des revendications précédentes, la zone déformable du manchon étant formée d'une seule pièce à partir d'un matériau flexible.

4. Système selon l'une quelconque des revendications précédentes, le volume de l'espace intérieur (140) étant majoritairement ou entièrement formé par l'espace de réception (4).

5. Dispositif cartouche (5, 6, 10, 20, 30, 40) destiné à être utilisé dans un système stéréolithographique (1), lequel dispositif cartouche présente un espace intérieur (140, 240, 340, 440) entouré d'un manchon (14, 141, 142, 143, 144, 24, 34, 44), le manchon du dispositif cartouche étant déformable, l'espace intérieur (140, 240, 340, 440) présentant un volume qui reste sensiblement constant lors d'une déformation du manchon et qui est au moins partiellement formé par un espace de réception (4) dans lequel une quantité d'une substance photosensible (3) peut être reçue pendant au moins une période de temps d'un processus d'irradiation et de durcissement et être accessible à un rayonnement (80) qui déclenche le durcissement de la substance photosensible, le manchon présentant sur le côté une ouverture refermable à travers laquelle la substance photosensible peut être introduite dans l'espace intérieur et dérivée depuis celui-ci.

6. Système selon la revendication 5, le manchon présentant des éléments d'étanchéité pour sceller l'ouverture.

7. Système selon la revendication 5 ou 6, l'ouverture pouvant être fermée par un élément de fermeture (11, 21, 100, 200, 300, 400, 500) qui est fabriqué d'une seule pièce, l'élément de fermeture étant conçu comme support des couches de substance photosensible durcies.

8. Dispositif cartouche (5, 6, 10, 20, 30, 40) destiné à être utilisé dans un système stéréolithographique (1), lequel dispositif cartouche présente un espace intérieur (140, 240, 340, 440) entouré d'un manchon (14, 141, 142, 143, 144, 24, 34, 44), le manchon du dispositif cartouche étant déformable, l'espace intérieur (140, 240, 340, 440) présentant un volume qui reste sensiblement constant lors d'une déformation du manchon et qui est au moins partiellement formé par un espace de réception (4) dans lequel une quantité d'une substance photosensible (3) peut être reçue pendant au moins une période de temps d'un processus d'irradiation et de durcissement et être accessible à un rayonnement (80) qui déclenche le durcissement de la substance photosensible, le dispositif cartouche présentant un élément mobile dans l'espace intérieur qui est guidé au moyen de guides de nature géométrique, mécanique et/ou magnétique dans le dispositif cartouche.

9. Dispositif cartouche (5, 6, 10, 20, 30, 40) destiné à être utilisé dans un système stéréolithographique (1), lequel dispositif cartouche présente un espace intérieur (140, 240, 340, 440) entouré d'un manchon (14, 141, 142, 143, 144, 24, 34, 44), le manchon du dispositif cartouche étant déformable, l'espace intérieur (140, 240, 340, 440) présentant un volume qui reste sensiblement constant lors d'une déformation du manchon et qui est au moins partiellement formé par un espace de réception (4) dans lequel une quantité d'une substance photosensible (3) peut être reçue pendant au moins une période de temps d'un processus d'irradiation et de durcissement et être accessible à un rayonnement (80) qui déclenche le durcissement de la substance photosensible, le dispositif cartouche présentant une pièce de fermeture (100, 200, 300, 400, 500, 11, 21) délimitant et fermant l'espace intérieur vers le haut, la pièce de fermeture interchangeable et de préférence conçue de manière rigide présentant des évidements géométriques qui sont formés dans une surface tournée vers l'espace intérieur.

10. Dispositif cartouche (5, 6, 10, 20, 30, 40) destiné à être utilisé dans un système stéréolithographique (1), lequel dispositif cartouche présente un espace intérieur (140, 240, 340, 440) entouré d'un manchon (14, 141, 142, 143, 144, 24, 34, 44), le manchon du dispositif cartouche étant déformable, l'espace intérieur (140, 240, 340, 440) présentant un volume qui reste sensiblement constant lors d'une déformation du manchon et qui est au moins partiellement formé par un espace de réception (4) dans lequel une quantité d'une substance photosensible (3) peut être reçue pendant au moins une période de temps d'un processus d'irradiation et de durcissement et être accessible à un rayonnement (80) qui déclenche le durcissement de la substance photosensible, le dispositif cartouche présentant une pièce de fermeture (100, 200, 300, 400, 500, 11, 21) délimitant et fermant l'espace intérieur vers le haut, la pièce de fermeture étant interchangeable,
la pièce de fermeture interchangeable étant composée de plusieurs parties et présentant au moins une zone (101) dans laquelle une ou plusieurs substances photosensibles peuvent être stockées.

11. Système selon la revendication 10, la zone étant agencée pour recevoir un récipient (101, 312, 401, 404) d'une substance photosensible, des moyens (105, 305) étant prévus pour perforer le récipient.

12. Dispositif cartouche (5, 6, 10, 20, 30, 40) destiné à être utilisé dans un système stéréolithographique (1), lequel dispositif cartouche présente un espace intérieur (140, 240, 340, 440) entouré d'un manchon (14, 141, 142, 143, 144, 24, 34, 44), le manchon du dispositif cartouche étant déformable, l'espace intérieur (140, 240, 340, 440) présentant un volume qui reste sensiblement constant lors d'une déformation du manchon et qui est au moins partiellement formé par un espace de réception (4) dans lequel une quantité d'une substance photosensible (3) peut être reçue pendant au moins une période de temps d'un processus d'irradiation et de durcissement et être accessible à un rayonnement (80) qui déclenche le durcissement de la substance photosensible, le dispositif cartouche présentant une pièce de fermeture (100, 200, 300, 400, 500, 11, 21) délimitant et fermant l'espace intérieur vers le haut, la pièce de fermeture étant interchangeable, la pièce de fermeture présentant au moins un piston intégré (301) dont le mouvement de course permet de doser la sortie de la substance photosensible.

13. Système selon la revendication 12, le piston (301) présentant des dispositifs (305) pour perforer ou ouvrir un récipient de substance photosensible (312) situé dans la pièce de fermeture.

14. Système selon l'une quelconque des revendications précédentes, avec un support d'informations (502, 503) qui contient des informations relatives à la substance photosensible en ce qui concerne la quantité, la nature et/ou l'état de celle-ci, et/ou des paramètres de traitement d'un processus de production d'un objet tridimensionnel.

15. Système stéréolithographique (1) pour produire un objet tridimensionnel (2) par durcissement couche par couche ou continu d'une substance photosensible (3) par exposition à un rayonnement spécifique qui déclenche le durcissement, le système comprenant : un dispositif porteur (7) ; une source de rayonnement (8) pour générer le rayonnement (80) qui déclenche le durcissement ; au moins un dispositif cartouche (5, 6) qui peut être positionné et retiré sur le dispositif porteur selon l'une quelconque des revendications précédentes, au moins une zone partielle du manchon étant transparente au rayonnement qui déclenche le durcissement.

16. Système selon l'une quelconque des revendications précédentes, comprenant un dispositif de génération de vibrations facilitant le détachement de l'objet tridimensionnel produit.

17. Système selon l'une quelconque des revendications précédentes, le dispositif cartouche pouvant être inséré de manière amovible dans le système stéréolithographique (1).
